# EUROPÄISCHE PATENTSCHRIFT

(11) **EP 2 512 920 B1**
(45) Veröffentlichungstag und Bekanntmachung des Hinweises auf die Patenterteilung: **30.01.2019**
(21) Anmeldenummer: 10792909.3
(22) Anmeldetag: 15.12.2010
(51) Int. Cl.: B64D 11/06, B64D 13/00, B60Q 3/44, B60Q 3/47, B64D 11/00

(54) **VERSORGUNGSMODUL FÜR PERSONENTRANSPORTFAHRZEUGE**
SUPPLY MODULE FOR PASSENGER TRANSPORT VEHICLES
MODULE DE DISTRIBUTION POUR VÉHICULES DE TRANSPORT DE PERSONNES

(30) Priorität: 15.12.2009 US 286483 P; 15.12.2009 DE 102009058312
(43) Veröffentlichungstag der Anmeldung: 24.10.2012
(73) Patentinhaber: Airbus Operations GmbH, 21129 Hamburg (DE)
(72) Erfinder: RIEDEL, Christian, 21640 Bliedersdorf (DE); FISCHER, Wolfgang, 21635 Jork (DE)
(74) Vertreter: LKGLOBAL Lorenz & Kopf PartG mbB Patentanwälte
(86) Internationale Anmeldenummer: PCT/EP2010/069702
(87) Internationale Veröffentlichungsnummer: WO 2011/082998

(56) Entgegenhaltungen:
- WO-A1-2010/086817
- JP-A- 2 003 556
- US-A1- 2003 114 178
- US-A1- 2005 110 952
- US-A1- 2007 061 847
- US-A1- 2008 068 220
- US-A1- 2008 080 197
- US-A1- 2008 106 702
- US-A1- 2009 112 407

## Beschreibung

Die vorliegende Anmeldung beansprucht die Priorität der US Provisional Patentanmeldung Nr. 61/286,483, eingereicht am 15. Dezember 2009 und der deutschen Patentanmeldung Nr. 10 2009 058 312.2, eingereicht am
15. Dezember 2009, deren Inhalte hierin durch Referenz inkorporiert werden.

### GEBIET DER ERFINDUNG

Die Erfindung betrifft ein Versorgungsmodul für Personentransportfahrzeuge, insbesondere Flugzeuge, ein Flugzeug mit einem Versorgungsmodul, ein Verfahren zum Betreiben eines Versorgungsmoduls zur Versorgung von Fahrzeuginsassen, ein Computerprogrammelement, um das genannte Verfahren auszuführen sowie ein computerlesbares Speichermedium.

### HINTERGRUNG DER ERFINDUNG

Für Transportfahrzeuge, die für Passagierreisen ausgelegt sind, ist es üblich, den Fahrzeuginsassen Versorgungseinheiten zur Verfügung zu stellen. Diese Form der Versorgungsmodule, sogenannte PSUs (Passenger Service Units), integrieren für einen oder mehrere Sitze Komfort-, Bedien-, oder Sicherheitselemente und die Versorgungsmodule weisen dabei Versorgungseinheiten, wie beispielsweise Leselampen für jeden einzelnen Passagier, ein Begleiterruflicht, Hinweiszeichen, Lautsprecher oder Belüftungsdüsen, Sitzreihennummerierungen, Sauerstoffmasken und -generator auf, die zu einer PSU bzw. einem Versorgungsmodul in einer Baugruppe zusammengefasst sind. Diese Versorgungsmodule sind üblicherweise oberhalb der Sitzgruppen unterhalb der Gepäckablagen angeordnet. Über einen sogenannten Passenger Supply Channel (PSC) kann das Versorgungsmodul beispielsweise an das Air Conditioning System, eine Sauerstoffleitung oder eine Stromversorgung angeschlossen werden.

Aus der DE 195 02 658 C1 ist eine Anordnung zur Versorgung von Passagieren in einer Passagierkabine, insbesondere in einem Flugzeug bekannt. Die Versorgungseinheit besteht aus Komfort-, und Bedienelementen, wie Leseleuchte, Stewardruftaste, Lautsprecher, Luftdüse und optischen Anzeigeelementen, wobei die Versorgungseinheit unterhalb der Gepäckablage angeordnet ist. Um das Absenken der Gepäckablage nicht zu behindern, ist die Versorgungseinheit an einem nachgiebigen, rückfederbaren Tragarm angeordnet, so dass jederzeit ein bequemes Erreichen der Bedien- und Komfortelemente der Versorgungseinheit innerhalb des Zugriffsbereiches der Passagiere ermöglicht ist.

Aus der DE 43 01 681 ist eine weitere Passagierversorgungseinheit im oberen Bereich einer Kabine, insbesondere einem Flugzeug, bekannt, die innerhalb eines in der Deckenkabinenverkleidung versenkten Schachtes in Kabinenlängsrichtung verschiebbar ist. In der Kabine eines Passagierflugzeuges ist jeweils einem oder mehreren Passagiersitzen eine derartige Versorgungseinheit zugeordnet. Bei Umrüstung einer Passagierkabine werden die Sitzabstände geändert und somit die Versorgungseinheiten so verlagert, dass gleichzeitig ein Verschieben der Entnahmestutzen zur Verbindung zwischen Luftleitung und Luftdusche notwendig wird.

US 2008/ 0080197 A1 beschreibt eine Lichtanordnung in einer Kabine zur Lichtversorgung für eine Vielzahl von Passagiersitzen. Die Lichtanordnung weist eine Vielzahl von Lichtquellen auf, die entlang der Längsachse der Kabine mit einem gleichbleibenden Abstand angeordnet sind. Die Lichtquellen können auf Änderungen der Sitzkonfiguration verändert werden.

Für die Versorgungsmodule bzw. PSUs werden standardisierte Einheiten verwendet, die an den Maßen der Inneneinrichtung der Kabine ausgelegt sind. Diese Versorgungsmodule, die Versorgungseinheiten, wie Anzeigeelemente, Schaltelemente oder Anschlusselemente für Luftzufuhr oder Energie oder Kommunikationsmittel zur Verfügung stellen, benötigen oftmals eine Abstimmung
mit der aktuellen Sitzplatzkonfiguration, so dass die relative Anordnung von Hilfsfunktionen wie Leseleuchten oder Flugbegleiterrufanzeigen bzw. Sitzreihenzeichen, je nach Sitzbelegung, angepasst werden muss. Wird eine Rekonfiguration der Sitze vorgenommen, können die Versorgungsmodule in einem sogenannten PSU Schacht bzw. "PSU rails" mit standardisierter Breite verschoben oder ausgetauscht werden und dabei zwischen den PSU-Einheiten entstehende Lücken mit Blenden bzw. sogenannten Infill-Panels geschlossen werden.

Beispielsweise können Leseleuchten mechanisch verschoben oder durch eine andere Standardeinheit mit einer höheren Anzahl von Leseleuchten neu eingesetzt werden. Herkömmliche Leseleuchten müssen jedoch anschließend von Hand auf die jeweiligen neuen Sitzpositionen ausgerichtet werden. Weiterhin gibt es verschiedene Versorgungsmodul-Varianten, in Abhängigkeit davon, wie viele Sitze beispielsweise einer Zweier-, Dreier- oder Vierer-Sitzreihe das Versorgungsmodul versorgt. Weiterhin kann sich das Versorgungsmodul auch unterscheiden, wenn es im linken oder rechten Versorgungskanal installiert wird. Diese notwendigen Umrüstungen führen zu einem entsprechend großen Zeit- und Kostenaufwand in der Installation und in der Umrüstung.

Um den logistischen Aufwand bei Rekonfigurationen der Sitzbelegung klein zu halten, ist ein flexibleres Versorgungsmodul notwendig.

### ZUSAMMENFASSUNG DER ERFINDUNG

Der Erfindung liegt daher die Aufgabe zugrunde, ein Versorgungsmodul für Passagiere von Personentransportfahrzeugen zur Verfügung zu stellen, das mehr Flexibilität und eine verbesserte Nutzung der zur Verfügung stehenden Fläche in dem Versorgungsmodul sowie kürzere Fertigungszeiten ermöglicht. Weiterhin sollen relativ schwere Komponenten vermieden werden und eine Komfortverbesserung für den Passagier des Personentransportfahrzeuges, insbesondere eines Flugzeuges, sowie eine Arbeitserleichterung für den Flugbegleiter während des Fluges erreicht werden. Weiterhin soll eine individuelle Zuordnung des Passagiers erreicht werden.

Diese Aufgabe wird durch eine Flugzeugkabine mit einem Versorgungsmodul für ein Personentransportfahrzeug mit einer ersten Versorgungseinheit für eine Versorgung mit einem ersten Versorgungsmedium in einem ersten Versorgungsbereich gelöst. Weiterhin weist das Versorgungsmodul eine Schnittstelle zu einem äußeren System zum Empfangen einer vorgebbaren Belegungssituation des Personentransportfahrzeugs und eine Steuerungseinheit auf, die ausgelegt ist zum Aktivieren der ersten Versorgungseinheit in einem ersten Teilbereich des ersten Versorgungsbereichs auf der Grundlage einer vorgebbaren Belegungssituation des Personentransportfahrzeugs. Das Versorgungsmodul ist oberhalb eines Passagiersitzes an einer Deckenverkleidung der Flugzeugkabine angeordnet. Das Versorgungsmodul ist basierend auf einer relativen Anordnung der Sitze zu einem fixierten Punkt in dem Personentransportflugzeug einstellbar, um die Passagiere zu versorgen. Der erste Versorgungsbereich ist ein Raum, der von den zu versorgenden Sitzeinheiten und dem dazugehörigen Beinraum seitlich begrenzt wird und sich bis zu einer Decke der Flugzeugkabine erstreckt. Die erste Versorgungseinheit weist mindestens eine Beleuchtungseinheit auf, wobei die Beleuchtungseinheit eine Lichtquelle aufweist, wobei die Lichtquelle ausgestaltet ist, einzeln zwei oder mehrere Sitze der Flugzeugkabine zu beleuchten.

Durch die Aktivierung von Teilbereichen wie z.B. Beleuchtungsteilbereichen können in einem Passagierflugzeug verschiedene Sitzpositionen beleuchtet werden, ohne dass eine mechanische Positionierung des Versorgungsmodules oder manuelle Ausrichtung der Versorgungseinheit Beleuchtung erfolgt. Das Versorgungsmodul muss nicht mehr wie üblich im Versorgungsmodul-Kanal (PSC) verschoben werden, sondern ist immer an derselben Stelle positioniert.

Im Folgenden wird der Ausdruck Versorgungsmodul bzw. PSU für eine Baugruppe verwendet, die an einen PSC angeschlossen werden kann und in standardisierten Aufnahmen oberhalb des Passagiersitzes in bzw. an der Deckenverkleidung angeordnet ist. Dabei werden in einem Versorgungsmodul typischerweise Dienste oder Funktionen vereinigt, wie Sicherheitselemente, wie zum Beispiel Sauerstoffmasken und -generator, Komfortelemente wie Beleuchtungen und Luftversorgungsdüsen bzw. -duschen, Passagierinformationszeichen und
Flugbegleiterrufzeichen sowie eine Videoanzeigevorrichtung. Weitere Versorgungseinheiten wie akustische Signaleinheiten wie Lautsprecher sind möglich. Das äußere System kann beispielsweise ein sogenanntes Kabinenmanagement-System sein (Cabin Management System, CMS), bzw. auch CIDS (Cabin Intercommunication Data System) genannt. Auf diese Weise ist eine Integration der Steuerung der Funktionalitäten des Versorgungsmodules in diesem System möglich. Zu den Aufgaben des CMS gehört beispielsweise die technische Umsetzung der Bedienerwünsche auf die lichterzeugenden Versorgungseinheiten, sodass je nach Bestuhlung Winkel oder Intensität eingestellt werden können. Als bedienerfreundliche Benutzeroberfläche kann z.B. ein Flight Attendant Panel (FAP) dienen.

Das CMS ist bei Flugzeugen in der Regel bereits vorhanden. Das CIDS kann die aktuelle Belegsituation und Kabinenlayout beispielsweise aus dem CAM (Cabin Assignment module) erhalten. Das CAM ist Speicherbereich oder-modul, das als Plug-in ausgeführt sein kann. Es kann beispielsweise in einem FAP installiert sein und enthält u.a. das Kabinenlayout. Als Versorgungsbereich wird ein Bereich verstanden, der mehrere Sitzeinheiten umfasst, die beispielsweise einen bis vier Sitze in einer Reihe umfassen können. Es können ein oder zwei Sitzreihen versorgt werden. Der Versorgungsbereich kann beispielsweise ein quaderförmiger Raum sein, der von den zu versorgenden Sitzeinheiten und dem dazugehörigen Beinraum seitlich begrenzt wird und sich bis zur Decke des Kabinenraumes des Transportfahrzeuges bzw. zum unteren Rand des Versorgungsmodules erstreckt. Andererseits kann der Versorgungsbereich, insbesondere bei Beleuchtungsvorrichtungen, kegelförmig mit ellipsenförmig Beleuchtungsflächen oder eine für die Passagier blendfreie bzw. eine optimierte Form der Ausleuchtung sein.

Gemäß einem weiteren Ausführungsbeispiel der Erfindung weist das Versorgungsmodul eine zweite Versorgungseinheit für eine Versorgung mit einem zweiten Versorgungsmedium in einem zweiten Versorgungsbereich auf, wobei die Steuerungseinheit ausgelegt ist, zum Aktivieren der ersten Versorgungseinheit in einem ersten Teilbereich des ersten Versorgungsbereichs und zum Aktivieren der zweiten Versorgungseinheit in einem zweiten Teilbereich des zweiten Versorgungsbereiches auf der Grundlage einer vorgebbaren Belegungssituation.

Der erste und zweite Versorgungsbereich können übereinstimmen oder teilweise überlappen. Eine Übereinstimmung des Versorgungsbereiches bedeutet, dass alle Passagiere, die sich in dem Versorgungsbereich befinden, mit sowohl dem ersten Versorgungsmedium als auch mit dem zweiten Versorgungsmedium versorgt werden können.

Sind der mindestens erste oder zweite Versorgungsbereich nicht deckungsgleich können die Versorgungsbereiche in Abhängigkeit der Reichweite der jeweiligen Versorgungsmedien variieren. So ist bei einer Anzeigevorrichtung des Displays der Versorgungsbereich dadurch begrenzt, inwieweit Passagiere oder Reisebegleiter die Anzeigevorrichtung vom Ablesewinkel her wahrnehmen können. Der Versorgungsbereich der Luftduschen wird durch die eingestellte Intensität, dem Belüftungsraster und der Auslenkbarkeit der Luftdüsenvorrichtung vorgegeben. Die Reichweite der Belüftung kann auch von der Inneneinrichtung abhängen, da ein Luftstrahl beispielsweise von einer Seitenwand abgelenkt werden kann. Der Versorgungsbereich von Bedienflächen wird dagegen von der Erreichbarkeit durch die Passagiere begrenzt. Handelt es sich um Bedienflächen, die durch Berührung aktiviert werden und oberhalb der Passagiere an der Kabinendecke angeordnet sind, ist dieses Versorgungsmedium nur für Personen erreichbar, die eine bestimmte Größe haben. Eine Bedienung mit teilweisem Aufstehen ist üblich und abhängig von dem Hatrack Design.

Weiterhin ist der Ausdruck Belegsituation auf die Sitzkonfiguration in einem Transportfahrzeug bezogen. Dabei kann es sich um verschiedene Transportfahrzeuge wie Flugzeuge, Busse, Schiffe oder Züge handeln, die häufig verschiedene Kombinationen von Passagieren und Fracht transportieren. Beispielsweise kann in der Luftfahrt oder in schienengebundenen Fahrzeugen zwischen erster Klasse bzw. Business Class oder zweiter Klasse bzw. Economy Class variiert werden. Daher ergeben sich verschiedene Sitzpläne bzw. Anordnungen der Monumente wie Toiletten, so dass sich verschiedene Belegungssituationen ergeben, die sich in der Regel wiederholen und vorgebbar sind.

Die vorgebbaren Belegungssituationen können in einer zentralen Steuerungseinheit abgespeichert werden, die wiederum das Versorgungsmodul mit zwei oder mehreren Versorgungseinheiten entsprechend den Belegsituationen aktivieren kann. Das System kann beispielsweise Kenntnis über die relative Anordnung der Sitze zueinander haben, beispielsweise der Sitze A, B und C. Weiterhin kann dieses System die Information darüber haben, wie die aktuellen Abstände zwischen den Sitzen sind, bzw. die jeweiligen Positionen zu einem fixierten bzw. relativen Punkt. Auf diese Weise können die Teilbereiche, die notwendig sind, um jeden Passagier ausreichend beispielsweise mit Licht zu versorgen, aktiviert werden. Beispielsweise kann für Dreier-Sitzreihen eine einzige Beleuchtungsvorrichtung so eingestellt werden, dass drei Lichtkegel zur Verfügung gestellt werden.

Weiterhin kann als zweites Versorgungsmedium als visuelle Information beispielsweise die Nummerierung der Sitzreihe mit den jeweiligen Sitznummern bzw. -buchstaben über den Sitzen mit Hilfe von variablen Displays angezeigt werden. Auf diese Weise müssen nicht mehr bedruckte, hinterleuchtete Scheiben verwendet werden, die beispielsweise Sitzplätze oder Anschnall- bzw. Nichtrauchersignale ausgeben. Während die herkömmlichen Signalzeichen nur durch den Austausch der kompletten Anzeigeneinheiten veränderbar sind, kann mit Hilfe der steuerbaren Anzeigeeinheiten in dem Versorgungsmodul, abhängig von der Sitzkonfiguration, die Sicherheitsinformationen oder Warnfunktionen bzw. weitere Informationen einfach und schnell zur Verfügung gestellt werden. Beispielsweise kann das "Bitte Anschnallen (Fasten Seatbelt)-Zeichen" nach der Start- und Landephase aus der Displayfläche aus- bzw. eingeblendet werden und informative oder unterhaltende Inhalte, wie z.B. Flughöhe, Börsenkurse oder Wetterbericht als Ticker eingeblendet werden. Das beispielhafte "Bitte Anschnallen (Fasten Seatbelt)-Zeichen" kann in Form von dreidimensionalen animierten Videos bzw. Grafiken deutlich von unterhaltenden Inhalten abgehoben dargestellt werden.

Mit Hilfe eines äußeren Systems wie dem CMS kann beispielsweise der Pilot Informationen akustisch über einen im Versorgungsmodul integrierten Lautsprecher mitteilen. Werden die akustischen Signale durch visuelle Informationen unterstützt, ist es beispielsweise auch möglich, die Passagiere mit den sicherheitsrelevanten Informationen mehrsprachig unter Zuhilfenahme von entsprechenden Untertiteln zu versorgen. Auf diese Weise können auch schwerhörige Passagiere bei Ansagen durch das Flugpersonal ausreichend informiert werden.

Als visuelle Informationen können beispielsweise Informationen für die Passagiere wie "Rauchverbot" oder "Anschnallen" angezeigt werden. Neben sicherheitsrelevanten Informationen können auch unterhaltende Inhalte wie komplexe Informationssysteme, wie Inflight-Entertainment oder Passenger-Flight-Informationen zur Verfügung gestellt werden. Bei der genannten Anzeigevorrichtung ist das Display so ausgelegt, dass es sowohl die Sicherheitselemente als auch die Unterhaltungselemente auf demselben Display jedoch deutlich voneinander getrennt, anzeigen kann. Flugbegleiter-bezogene Funktionen können mit visuellen Informationen angezeigt werden, indem ein Aufleuchten der Steward-Ruftaste die Anfrage des Passagiers anzeigt.

Da das Beleuchtungssystem über die Schnittstelle mit einem äußeren System wie dem CMS verbunden ist, können die gewählten Funktionen einfach an die Flugbegleiter weitergeleitet werden. Mit Hilfe dieses Anschlusses an ein zentrales System können die Stewards passagierbezogene Anfragen sofort erfassen.

Versorgungseinheiten für akustische Signale können in Form von einem Lautsprecher in einem Versorgungsmodul vorgesehen werden. Die Reichweite der akustischen Signale ist in der Regel Sitzreihen übergreifend, so dass es ausreicht, entlang des PSC nur in jedem zweiten Versorgungsmodul Lautsprecher anzuordnen. Im Versorgungsmodul kann eine interne Recheneinheit vorgesehen sein, die es ermöglicht Audiodaten wie beispielsweis das Datenformat MP3 zu prozessieren. Das Versorgungsmittel Luft wird den Passagieren zur Verfügung gestellt, wenn die entsprechend der Belegsituation aktivierten Luftdüsen über eine entsprechende Bedienvorrichtung angeschaltet werden. Die Ausrichtung der Luftdüse kann in Abhängigkeit von der Belegsituation vor dem Flug automatisch auf den entsprechenden Passagiersitz bzw. seine Position eingestellt werden. In der Regel werden in einem Versorgungsbereich Belüftungsdüsen für die maximal mögliche Anzahl von Sitzplätzen zur Verfügung gestellt. Ist die maximale Belegsituation des Versorgungsbereiches nicht gegeben, werden nur die Belüftungsdüsen aktiviert, die einen zugeordneten Passagiersitz besitzen, so dass in diesem Fall eine Überbestückung von Belüftungsventilen vorliegt. So kann die Belegsituation von Economie-Class zu Business Class dahin führen, dass anstelle von vier Sitzen nur noch zwei Sitze in demselben Bereich installiert sind. Daraufhin werden nur die Düsen aktiviert, die diesen zwei Sitzen am nächsten sind. In einer Realisierung des flexiblen PSU ist weiterhin eine Luftduschen-Versorgung in einem separierten Versorgungskanal möglich.

Ein weiteres mögliches Versorgungsmedium ist medizinischer Sauerstoff. Dieser wird über Passagiersauerstoffmasken in Flugzeugen zur Verfügung gestellt, welche im Falle eines Druckabfalls in der Kabine aus bereitgestellten, abschließbaren Behältern in den Versorgungsmodulen herausfallen. Die Öffnung der jeweiligen Klappe wird ebenfalls nur in Abhängigkeit von der Zahl der belegten Sitze im Versorgungsbereich aktiviert. Dabei sind die heruntergefallenen Sauerstoffmasken für die jeweiligen Passagiere einfach zu erreichen, so dass sie von jedem einzelnen benutzt werden können.

Für den Fall, dass eine Sitzreihe maximal vier Sitze umfassen kann, werden vier Passagier-Sauerstoffmasken in dem Versorgungsmodul zur Verfügung gestellt. Dabei weisen diese Masken stets einen Notsauerstoffversorgungsschlauch auf, über den sie mit einem an das Versorgungsmodul angeschlossenen Sauerstoffanschluss medizinischen Sauerstoff zur Verfügung gestellt bekommen. Dabei sind die Passagiersauerstoffmasken und entsprechende Anschlussschläuche gebrauchsfertig in den jeweiligen Klappen eingebaut.

Das Versorgungsmedium Beleuchtung kann in einer ersten Versorgungseinheit mit einer einzelnen Beleuchtungseinheit eine Mehrzahl von Plätzen ausleuchten. Auf diese Weise kann eine individuelle Lesebeleuchtung von jedem einzelnen Passagier einer Sitzreihe genutzt werden. Als Lichtquelle für eine einzelne Beleuchtungseinheit kann eine Leuchtdiode (LED), Leuchtdiodenmatrix, Superlumineszenz-Leuchtdiode (SLED) oder eine Laservorrichtung bereitgestellt werden.

Eine SLED ist eine Lichtquelle mit Eigenschaften einer LED und einer Laserdiode. Laserstrahlen als Lichtquelle können bei der Laserprojektion verwendet werden. Bei der Laserprojektion können direkt auf Teilbereichflächen raster- oder vektororientierte Grafiken projiziert werden. Die oben genannten Lichtquellen können mit Flüssigkristallanzeigen (Liquid Crystal Display, LCD) oder Mikrospiegelsystemen sowie optischen Komponenten kombiniert werden. Vorteilhafte Ausgestaltungen der Lichtquellen sind sehr lichtstark und kompakt gebaut. Auf diese Weise kann mit einer einzelnen Lichtquelle eine Mehrzahl von Teilbereichen ausgeleuchtet werden.

Die Beleuchtungsmuster oder -teilbereiche bzw. Lichtkegel, die die gewünschten Sitze in Teilbereichen des beispielsweise ersten Versorgungsbereichs ausleuchtet, können in Form von Bilddaten pixelbasiert erzeugt werden. Auf diese Weise kann eine Mehrzahl von geometrischen Elementen, aber auch graphischen Symbolen dargestellt werden. Die Beleuchtungseinheit des Versorgungsmoduls weist eine Bilddatenschnittstelle zum Empfang von Bilddaten von einem Bilddatengenerator auf, um auf Grundlage der Bilddaten mindestens eine Teilbeleuchtungsbereich- bzw. fläche und/oder Bildinformation zu projizieren. Der Bilddatengenerator ist ausgelegt, Beleuchtungsmuster, Symbole, Piktogramme, Schriftzeichen, Videos oder andere Informationen in Abhängigkeit von einer vorgebbaren Belegungssituation zu erzeugen.

Mit Hilfe einer Steuereinheit können die Bilddaten aus einem Speicher oder von außen geladen werden, die der aktuellen Belegsituation angepassten Beleuchtungssteuerungsdaten umsetzen. Weiterhin können die Beleuchtungsmuster intern in den einzelnen Versorgungsmodul-Einheiten abgelegt werden. So können kundenspezifische Anpassungen wie rechts/links (R/L) einfach durchgeführt werden. Damit ist eine flexible Anpassung an das jeweilige Layout bzw. der jeweiligen Belegsituation des Flugzeuges möglich.

Die Einstellungen der Beleuchtungseinheit können über Bedienflächen weiterhin durch den Passagier erfolgen. Wählt der Passagier mit Hilfe eines Bedienelementes eine bestimmte Helligkeit oder gar keine Beleuchtung, kann dies über ein entsprechendes Bedienelement im Versorgungsmodul eingestellt werden. Die Bedienflächen sind beispielsweise als Touchscreen, Kippschalter oder Sensoren ausgelegt. Während der Start- und Landephasen können individuelle Beleuchtungseinstellungen ausgeschaltet und eine regelmäßige Beleuchtung für alle Sitzplätze über ein äußeres zentrales System vorgegeben werden.

Die Bedienflächen können auch mit Beleuchtungsflächen gekoppelt sein. So kann zum Beispiel die Flugbegleiter-Ruftaste leuchten, so dass ein Flugbegleiter eine Aktivierung durch einen Passagier einfach feststellen kann. Weiterhin kann eine derartige Aktivierung über den Anschluss an ein zentrales äußeres System auch an ein FAP weitergegeben werden, so dass die Flugbegleiter diese Information auch erhalten können, wenn sie nicht in die Richtung der entsprechenden Sitzreihe blicken.

Während sowohl die Beleuchtung als auch visuelle Information durch eine einzige Versorgungseinheit pro Versorgungsmodul eine gesamte Sitzreihe als möglichen Versorgungsbereich versorgen kann, sind Versorgungsmedien wie Luft bzw. medizinischer Sauerstoff jeweils für jeden einzelnen Sitz der Sitzreihe vorzusehen. Auf diese Weise liegt bei einem Kabinenlayout mit einer Belegung von weniger Sitzen als die maximal mögliche Anzahl in einem Versorgungsbereich eine Überbestückung von Luftdüsen bzw. Sauerstoffmasken bzw. -generatoren vor. Versorgungsmedien wie visuelle Informationen können auf einem geeigneten Anzeigebereich variabel angezeigt bzw. projiziert werden. Dabei können auch wichtige Passagierinformationen wie Anschnallpflicht bzw. Nichtraucherzeichen angezeigt werden. Ebenfalls können Bedienflächen variabel aktiviert werden und jedem einzelnen Passagier zur Verfügung gestellt werden.

Gemäß einem weiteren Ausführungsbeispiel der Erfindung sind der erste Versorgungsbereich und der zweite Versorgungsbereich übereinstimmend ausgelegt.

Auf diese Weise wird gewährleistet, dass jeder einzelne Passagier in einem Versorgungsbereich unabhängig von der Belegsituation mit allen im Versorgungsmodul integrierten Versorgungseinheiten und den entsprechenden Versorgungsmedien versorgt werden kann. Dies umfasst auch die Möglichkeit, dass für mehrere Passagiere in einem Versorgungsbereich eine einzige Anzeigeeinheit vorgesehen ist, die von allen Passagieren einer Sitzreihe gleichzeitig eingesehen werden kann. Weiterhin ist es möglich, eine Überbestückung von Versorgungsmedien bzw. Funktionen oder Teilen derart vorzusehen, dass bei jeder beliebigen Sitzposition ein passendes Gerät bzw. Funktion oder Versorgungsmedium sich in Reichweite eines jeden Passagiers befindet.

Für die Ausgestaltung der Leseleuchten ist es möglich, dass jede beliebige Sitzposition und bis zu vier Sitze mit einem einzelnen Leselicht ausgeleuchtet werden. Mit Hilfe von zusätzlichen Funktionen, die es erlauben, mit Hilfe eines Lichtkegels und Projektionstechniken Informationen zu übertragen, können Sitznummern oder Videobilder dem Passagier angezeigt werden. Weiterhin können Teilbeleuchtungsflächen des Versorgungsbereiches nicht nur Sitze oder Esstabletts betreffen, sondern auch die Seitenwände oder Gangflächen. Entsprechende Beleuchtungsflächen können beispielsweise aktiviert werden, wenn die Lande- und Startphase oder andere Situationen vorliegen, die eine Gesamtbeleuchtung des Kabineninnenraums erfordern.

Um Gewicht einzusparen, ist es auch von Vorteil, ein einzelnes Flachdisplay zu verwenden, was von der gesamten Sitzreihe eingesehen werden kann. Luftduschen können so ausgelegt werden, dass sie geschwenkt werden können oder einen Diffusor bzw. Luftteiler besitzen, dass zwei Sitzpassagiere mit einer Luftdüse versorgt werden können.

Die gewählte Anordnung der Komfortschalt- oder Sicherheitselemente im Versorgungsmodul kann von dem verwendeten Flugzeugtyp und installierten Sitzreihen (z.B. Zehner Abreast) oder von den Flugstrecken (Kurz- bzw. Langstrecke) abhängig sein. Für eine Umrüstung können die Anzeigeelemente bzw. Bedienungsflächen einfach elektronisch angepasst werden. Das kompakte Versorgungsmodul kann dabei kundenangepasst Versorgungseinheiten zur Verfügung stellen.

Gemäß einer beispielhaften Ausführungsform der Erfindung weist eine Versorgungseinheit eine Anzeigevorrichtung auf, die ausgelegt ist, Symbole, Piktogramme, Schriftzeichen, Videos oder andere Informationen in Abhängigkeit von der vorgebbaren Belegungssituation anzuzeigen.

Auf diese Weise können Informationsdaten für den Passagier einfach visualisiert werden. Beispielsweise mit einem OLED (organic light emitting diode)- Display oder einem projizierten Bild können farbige Videos oder andere Informations- und Unterhaltungsdienste dem Passagier zur Verfügung gestellt werden. Über eine Schnittstelle zu einer Steuereinheit kann auf einen Speicher zugegriffen werden, der bordintern zum Speichern von Informationsdaten zur Verfügung steht. Über eine Bedieneinheit kann der Passagier oder auch das Flugbegleiterpersonal einen gewünschten Datensatz auswählen und in der Anzeigevorrichtung visualisieren. Hierbei kann es sich um stehende oder bewegte Bilder, gegebenenfalls mit Untertitel oder entsprechender Vertonung, handeln. Beispielsweise kann es dem Passagier ermöglicht werden, selbst die Information bezüglich einer aktuellen Flugposition oder höheren Position des Flugzeuges abzurufen und visualisieren zu lassen. Weiterhin ist es möglich, Unterhaltungsprogramme, wie Spiele oder Kinderprogramme auf dem Display anzuzeigen.

Gemäß einer weiteren Ausführungsform der Erfindung weist eine Versorgungseinheit mindestens eine interaktive Berührungsfläche auf, die ausgelegt ist, mindestens eine Bedienfläche in Abhängigkeit von der einen vorgebbaren Belegsituation zu aktivieren.

Eine interaktive Berührungsfläche kann beispielsweise direkt im Anschluss an eine Anzeigevorrichtung angeordnet sein. Dabei können herkömmliche Schaltflächen durch Touchscreens oder interaktive Berührungsflächen ersetzt werden.

Weiterhin können die Anzeigefläche und die Berührungsfläche kombiniert werden, indem die Anzeigefläche berührungsempfindlich ausgestaltet wird. Wird die gesamte Displayfläche als berührungsempfindlich vorgesehen, können an beliebigen Stellen interaktive Berührungsflächen durch eine entsprechende Kennzeichnung mit Hilfe des Displays gestaltet werden. Je nachdem, wie viele Sitze versorgt werden sollen, können daraufhin die Größen der interaktiven Berührungsflächen bzw. des Displays variiert werden. Werden beispielsweise in dem Versorgungsbereich zwei Sitze versorgt, können größere Bildschirmflächen und interaktive Berührungsflächen angeordnet werden als für den Fall, wenn vier oder mehr Sitze mit demselben interaktiven Display versorgt werden. Dabei sind die Bedienflächen abhängig von der Anzahl der bedienbaren Versorgungseinheiten bzw. Ruftasten. Über ein geeignetes Touchpanel können bei zwei zu versorgenden Sitzen beispielsweise zwei Flugbegleiterruftasten installiert sein und zwei Schaltflächen für Leseleuchten realisiert werden. Weiterhin ist es möglich, dass jede einzelne Bedienfläche eine eigene interaktive Berührungsfläche zugewiesen bekommt.

Gemäß einer weiteren Ausführungsform der Erfindung weist eine Versorgungseinheit mindestens eine Bedienfläche auf, die ausgelegt ist, eine Aktivierung durch kapazitive Sensoren, resistive Sensoren, induktive Sensoren, Infrarotsensoren oder andere Scanner zu übertragen.

Scanner können dabei Datenerfassungsgeräte sein, die Input von außen registrieren und weitergeben können. Mit Hilfe der Infrarotsensorik ist es beispielsweise möglich, ohne mechanische Schalter die Annäherung von beispielsweise Zeigefinger an einem Bedienelement zu erfassen. Weiterhin können kapazitive, resistive oder induktive Sensoren eingesetzt werden, die es ermöglichen, durch eine Scann-Methodik Bedienelemente zu aktivieren. Derartige Bedienelemente können einfach sauber gehalten werden. Ein entsprechend weit reichender Infrarotsensor kann in Kombination mit einer virtuellen projizierten Bedienfläche den Passagier auf Höhe der Armlehne oder des Tabletts mit einem Bedienflächenelement versorgen.

Gemäß einem weiteren Ausführungsbeispiel der Erfindung weist das Versorgungsmodul eine Elektronikeinheit auf, mit einem Speicherelement, das ausgelegt ist, mindestens eine vorgebbare Belegsituation zu speichern.

Dabei kann es sich bei der Elektronikeinheit um eine Schnittstellen- und Versorgungseinheit handeln, die sogenannte Passenger Interface and Supply Adapter (PISA), die als Kontroll- und Steuerungseinheit für das Versorgungsmodul verwendet wird. Die PISA kann die Einspeisung von Informationen einerseits über eine Airline-spezifische Schnittstelle oder Standard-Schnittstellen ermöglichen. Weiterhin ist es möglich, über die Schnittstelle aktualisierte Daten während des Fluges zu erhalten, die dem Avioniksystem des Flugzeuges entstammen und beispielsweise dem Fluggast Daten wie Flughöhe oder Außentemperatur angeben können.

Die PISA, die eine zentrale Recheneinheit (Central Processing Unit, CPU) aufweist, kann auch dezentral genutzt werden. Auf diese Weise kann mindestens eine Versorgungseinheit unabhängig von der zentralen Einheit gesteuert werden. Die PISA zeichnet sich durch eine kleine Bauform und geringe Eigenstromaufnahme aus. Zur Ansteuerung von Versorgungseinheiten mit höherem Stromverbrauch wie Beleuchtungseinheiten kann die PISA mit Treiberstufen beschaltet sein. Die Steuerungseinheit für eine Beleuchtungseinheit kann in der Ansteuerungselektronik der PISA integriert werden. Auf diese Weise können je Versorgungsmodul mehrere Beleuchtungseinheiten oder Projektionsvorrichtungen effizient gesteuert werden. Ferner kann die Steuerungseinheit eine Multiplexvorrichtung für die Steuerung einer Beleuchtungseinheit aufweisen, die ausgelegt ist, diese Beleuchtungseinheit mehrfach bezüglich der unterschiedlichen Teilbereiche auszuleuchten.
Mit Hilfe eines Speichermediums können Informationen wie vorgebbare Belegsituationen gespeichert werden, die beispielsweise am Boden entsprechend der eingerichteten Sitzkonfiguration auf das Speicherelement geladen werden können. Die notwendigen Informationen des Kabinensitzplanes können auch vom CMS empfangen werden.

Gemäß einem weiteren Ausführungsbeispiel der Erfindung weist eine Versorgungseinheit eine Beleuchtungseinheit auf, die ausgelegt ist, Teilbeleuchtungsflächen oder -bereiche auf Grundlage einer vorgebbaren Belegsituation auszuleuchten.

Auf diese Weise kann das Versorgungsmodul mit einer einzigen Beleuchtungseinheit, eine oder mehrere beliebig geformte Beleuchtungsflächen innerhalb des jeweils definierten Versorgungsbereiches ausleuchten. Die Lichtquelle der Beleuchtungseinheit kann eine einzige weiße LED sein, die ein sehr intensives Licht bei geringem Stromverbrauch erzeugt. Dabei richtet sich das Beleuchtungsmuster nach der Anzahl der Sitze. Die Teilbeleuchtungsflächen können durch eine geeignete Elektronik- bzw. Steuerungseinheit eine Mehrzahl von Öffnungswinkeln, Richtungen, Beleuchtungsintensitäten, Farben und/oder Formen der Beleuchtung in dem jeweiligen Versorgungsbereich ansteuern. Die Einstellungen für beispielsweise Einstellwinkel können über das CMS zentral oder an jedem Versorgungsmodul einzeln vorgenommen werden. Dabei kann die Einstellung der Beleuchtungseinheit, z.B. das Anschalten oder Ausschalten bzw. Farbe, Helligkeit, Dimmen über den Passagier erfolgen. Die individuellen Einstellungen können über die oben genannten Bedienflächen erfolgen.

Auf einem geeigneten Speicherelement der Elektronikeinheit für die Beleuchtungsvorrichtung können den Sitzkonfigurationen entsprechende Beleuchtungsmuster abgespeichert werden. Weiterhin können diese Beleuchtungsmuster den einzelnen Positionen der Versorgungsmodule in Bezug auf die Kabine angepasst werden, so zum Beispiel, ob das Versorgungsmodul links oder rechts angeordnet ist.

Eine interne Recheneinheit mit Speicher kann eine einzelne Beleuchtungseinheit über einer Zweier-Sitzreihe ansteuern, so dass beispielsweise zwei nebeneinander angeordnete Beleuchtungsflächen je Tablett zum Essen aktiviert werden können. Auf diese Weise kann mit einer einzelnen Beleuchtungseinheit eine Mehrzahl von Plätzen ausgeleuchtet werden. Beispielsweise kann ein Bereich von 1 m x 1 m mit einer einzelnen Beleuchtungseinheit ausreichend beleuchtet werden. Durch die Verwendung einer einzelnen Beleuchtungseinheit können Kosten und Gewicht eingespart werden. Gleichzeitig können die Montagezeiten für diese Beleuchtungseinheiten während der Final Assembly Line (FAL) reduziert werden.

Gemäß einem weiteren Ausführungsbeispiel ist die Beleuchtungseinheit als Mini-Projektionsvorrichtung ausgestaltet.

Ein Mini-Projektionsvorrichtung oder Pico-Projektor ist sehr klein und kompakt gebaut mit einer Bauhöhe von 10 cm oder geringer. Diese Projektoren verwenden starke Lichtquellen, so dass die Beleuchtungsleistung ausreichend für einen nutzbaren Ausleuchtungsbereich von ca. 100 cm x 100 cm ist. Durch die kompakte Bauweise kann Gewicht und Platz eingespart werden. Aus dem gesamten Ausleuchtungsbereich wird nur ein Teil zur individuellen Sitzbeleuchtung genutzt, während der Rest nicht ausgeleuchtet wird. Es kann eine Maskierung der nicht genutzten Bereiche erfolgen. Wird eine Beleuchtungseinheit nicht benötigt, findet keine Aktivierung dieser Versorgungseinheit statt.

Gemäß einem weiteren Ausführungsbeispiel der Erfindung weist die Mini-Projektionsvorrichtung bzw. der Pico-Projektor mindestens ein Lichtmodulationselement auf, wobei das Lichtmodulationselement ausgewählt ist aus der Gruppe bestehend aus: Digital Light Processor (DLP) mit einer Vielzahl von Mikrospiegeln; Flüssigkristallanzeigen LCDs); Liquid Crystal on Silicon (LCoS); und Micro-Mechanical Systems (MEMS).

Zum Modulieren des Lichtes können die genannten elektrooptischen Vorrichtungen genutzt werden. Dabei wird auch auf die Verwendung von kleinen Bauteilen geachtet. In der DLP-Technik werden Digitale Mikrospiegelchips verwendet, die eine hohe Anzahl von Mikrospiegeln mit einer Kantenlänge von wenigen mm bis einigen µm aufweisen. Lichtbeugung kann auch an einem optischen Gitter erfolgen. Diese Verfahren werden bei MEMS verwendet.

LCoS-Displays sind üblicherweise sehr klein und können als Microdisplays Kantenlängen von wenigen mm besitzen. Trotz ihrer geringen Größe können die LCoS-Displays mehr als zwei Millionen Pixel haben und ermöglichen Auflösungen von 1600 x 1200 Bildpunkten. Auch LCDs können in einem Mini LCD-Projektor derartig hohe Auflösungen trotz kleiner Baugrößen erzeugen.

Gemäß einem weiteren Ausführungsbeispiel der Erfindung weist eine Versorgungseinheit eine Beleuchtungseinheit auf, die darauf ausgelegt ist, mit mindestens einer aktivierten Teilbeleuchtungsfläche Bildinformationen zu projizieren.

Auf diese Weise können Bildinformationen und Bilddaten mittels Frontprojektion oder Rückprojektion projiziert werden. Weiterhin können durch Pixel-basierte Bilddaten in jeder beliebigen zweidimensionalen Form auf eine Teilbeleuchtungsfläche örtlich differenziert projiziert werden. Die Form des einstellbaren Lichtkegels bzw. Teilbereich ist dabei lediglich von der hinterlegten Bilddatei abhängig.

Zum Empfang von Bilddateien oder Bilddaten kann ein Bilddatengenerator bereitgestellt werden, wobei die Beleuchtungseinheit eine Bilddatenschnittstelle zum Empfang der Bilddaten aufweist. Auf Grundlage der vom Bilddatengenerator empfangenen Bilddaten können Beleuchtungsmuster, Symbole, Piktogramme, Schriftzeichen, Videos oder andere Informationen in Abhängigkeit von einer vorgebbaren Belegungssituation erzeugt werden.

Zur Erstellung von unterschiedlichen Lichtkegeln kann ein Rasterverfahren angewandt werden, wie es beispielsweise bei der Laserprojektion üblich ist. Auf diese Weise können animierte Piktogramme dargestellt werden, die eine flexible Größe oder Position aufweisen können. Für eine Bildinformation ist beispielsweise eine Sitznummerierung zu nennen. Die Sitznummerierungen können dabei auf die jeweilige Sitzfläche projiziert werden. Sobald die Einstiegsphase der Passagiere beendet ist, kann die Sitzplatznummerierungsbeleuchtung zentral über das Kabinenmanagement-System ausgeschaltet werden und die Beleuchtungseinheit für andere Anzeigen genutzt werden. Kurz vor der Lande- bzw. Startphase oder bei Turbulenzen können Anzeigen wie "Fasten Seatbelt" oder ähnliches wie eine Anzeige, zurück zu den Sitzen zu gehen, verwendet werden.

Vorprogrammierte Informationen könnten beispielsweise enthalten, dass der Passagier mit Namen willkommen geheißen wird. Derartige Funktionalitäten stellen einen Mehrwert für die Passagiere dar und können insbesondere für kundenorientierte Airlines verwendet werden.

Gemäß einem weiteren Ausführungsbeispiel der Erfindung ist die Schnittstelle des Versorgungsmoduls zum Empfangen und Senden von Daten mit einem äußeren System ankoppelbar, wobei das äußere System ein CMS aufweist.

Auf diese Weise kann beispielsweise ein im Flugzeug bereits vorhandenes Datenübertragungssystem, z. B. das CMS, genutzt werden. Die Übertragung der Informationen bzw. Daten erfolgt dabei über ein Datenbussystem. Dieses Datenbussystem kann wiederum über eine drahtlose Übertragungstechnik, wie beispielsweise Satellitentechnik wie Satcom, aktuelle Daten empfangen.

Daten wie Konfigurationsdaten des Versorgungsmoduls können über die Schnittstelle und einen Zentralrechner des CMS in das flugzeuginterne Datenbussystem eingespeist werden. Als Speichermedium können hier üblicherweise verwendete Speichermedien wie CD-Roms, Speicherkarten, USB-Sticks verwendet werden. Durch die Nutzung des CMS ist eine Auswahl oder Einspeisung der Informationen auch durch die Flugbegleiter möglich. Dies kann beispielsweise über ein Bedienpanel mit einer zusätzlichen Tastatur oder ein Touchscreen des FAP erfolgen.

Eine Zuordnung der Information zu einer Klasseneinteilung oder individuellen Sitzbelegung ist über eine entsprechende Rechen- bzw. Bedieneinheit oder Steuer- und Kontrolleinheit realisierbar, die im CMS integriert ist. Dabei können die Kontroll- und Steuereinheit und die Rechen- und Bedieneinheit in einer Geräteeinheit zusammengefasst sein.

Gemäß einem weiteren Ausführungsbeispiel der Erfindung ist eine Schnittstelle des Versorgungsmodules mit einer lokalen Steuerungseinheit in einem Computermodul verbunden.

Diese Ausführungsform ermöglicht eine von einer externen Steuerungseinheit unabhängige Steuerung des Versorgungsmoduls. Auf diese Weise können die Passagier- bzw. Flugbegleiter-bezogenen Funktionen mit Hilfe einer internen Rechen- und Speichereinheit ausgeführt werden. Hierdurch wird erreicht, dass Verkabelungsarbeiten bei Umrüstungen nicht mehr erforderlich sind und eine Schnittstelle nach außen nur vorgesehen ist, wenn Daten am Boden zur Wartung oder zum Umrüsten übertragen werden. Auf diese Weise können die Kosten einer Kabinenumrüstung weiterhin gesenkt werden. Diese Ausführungsform mit internem Rechner bietet sich insbesondere bei Versorgungseinheiten an, die einfach anzusteuern sind und nicht auf aktuelle Daten angewiesen sind. Die Daten, die zur allgemeinen Abfrage für den Passagier bereitgehalten werden, können zu Beginn des Fluges auf einen internen Speicher geladen werden. So können beispielsweise Musik oder Spielprogramme auf das Versorgungsmodul geladen werden.

Gemäß einem weiteren Ausführungsbeispiel der Erfindung ist die Elektronikeinheit im Versorgungsmodul angeordnet und weist eine Steuerungseinheit auf, um mindestens eine Versorgungseinheit und eine Mini-Projektionsvorrichtung zu steuern.

Mit einer lokalen Elektronikeinheit wie der PISA kann das äußere System entlastet werden, da die Steuerung nach geeigneter Voreinstellung und Empfangen der Belegsituation über eine Schnittstelle unabhängig laufen kann.

Weiterhin kann die Ansteuerungselektronik mindestens einer Miniprojektionseinheit auf der lokalen Elektronikeinheit PISA integriert werden. Über eine PISA-Steuerelektronikeinheit können mehrere Beleuchtungseinheiten angesteuert werden. Diese effiziente Steuerung spart Platz und kann sowohl lokal oder über ein äußeres System gesteuert werden.

Gemäß einer weiteren Ausführungsform der Erfindung wird ein Flugzeug mit einem Versorgungsmodul bereitgestellt, wobei das äußere System das CMS aufweist, das ausgelegt ist, zu steuern oder Daten an die Schnittstelle auszugeben und zu empfangen.

Ferner wird ein Flugzeug bereitgestellt mit einem Versorgungsmodul mit mindestens einer ersten und einer zweiten Versorgungseinheit und einer Schnittstelle zu einer Steuerungseinheit, wobei das Flugzeug ein CMS aufweist, das ausgelegt ist, Daten an die Schnittstelle auszugeben und zu empfangen und die Versorgungseinheiten auf der Grundlage einer vorgebbaren Belegungssituation zu aktivieren.

Durch die Verbindungen zum CMS kann die Kundenanpassung vereinfacht werden und die Umrüstung erfolgt nicht mehr mechanisch durch Verschieben oder Austauschen der Module. Durch geeignete elektronische Ansteuerung können beispielsweise verschiedene Lesebeleuchtungspositionen für die entsprechenden Sitzlayouts angepasst werden. Das Versorgungsmodul eignet sich weiterhin, um Kosten und Installationsarbeiten bei der FAL einzusparen. Weiterhin können die Wartungskosten durch die Anwendung flexibler Versorgungsmodule und die Betriebskosten herabgesetzt werden. Da das Versorgungsmodul durch ein einzelnes Datenbussystem versorgt werden kann, ist im PSC eine Reduktion der Verkabelung möglich, womit Gewicht eingespart werden kann.

Gemäß einem weiteren Ausführungsbeispiel (nicht beansprucht) umfasst ein Verfahren zum Betreiben eines Versorgungsmoduls zur Versorgung von Fahrzeuginsassen folgende Verfahrensschritte: Empfangen von Daten von einem äußeren System bezüglich einer vorgebbaren Belegungssituation, Aktivieren einer ersten Versorgungseinheit des Versorgungsmoduls für eine Versorgung mit einem ersten Versorgungsmedium in einem ersten Teilbereich eines ersten Versorgungsbereiches durch eine Steuerungseinheit auf Grundlage einer vorgebbaren Belegsituation. Optional kann als weiterer Verfahrensschritt eine Aktivierung einer zweiten Versorgungseinheit des Versorgungsmoduls für eine Versorgung mit einem zweiten Versorgungsmedium in einem zweiten Teilbereich eines zweiten Versorgungsbereichs durch eine Steuerungseinheit auf der Grundlage der empfangenen Daten erfolgen.

Auf diese Weise können den Passagieren mit einem einzigen Modul mehrere Versorgungseinheiten zur Verfügung gestellt werden. Dabei ist es nicht notwendig, jede Versorgungseinheit zu aktivieren. Optional können Overhead-Videos mit Hilfe einer geeigneten Versorgungseinheit, die als Anzeigeeinheit ausgestaltet ist, den Passagieren angeboten werden. Hierbei können unterschiedliche Anzeigevorrichtungen und Display-Techniken zum Einsatz kommen.

Ein weiterer Vorteil ist, dass das Versorgungsmodul einfach zu säubern ist, insbesondere dadurch, dass Bedienflächen benutzt werden können, die durch bestimmte geeignete Techniken eine Kombination des Displays und interaktiver Berührungsflächen zulassen. So kann beispielsweise eine Displayfläche interaktive Teilbereiche aufweisen, die wie ein Touchscreen oder Touchpanel fungieren. Weiterhin ist es möglich, die Beleuchtungseinheiten, die in dem Versorgungsmodul integriert sind, mit Linsen auszustatten, deren Ränder beleuchtet sein können. Durch diese Randbeleuchtung kann angezeigt werden, welche Beleuchtungseinheiten unter der gegebenen Sitzkonfiguration aktiviert werden können.

Je nach Kostenbudget können kleinere oder größere Displays, beispielsweise aus OLEDs oder auch effiziente LED-Projektoren verwendet werden. Die Steuerung der Informationen kann über ein geeignetes Bedienungsterminal, wie beispielsweise ein FAP gesteuert werden. Über das CMS kann auch der Pilot wichtige Piktogramme, wie Anschnallpflicht, aktivieren.

Gemäß einem weiteren Ausführungsbeispiel (nicht beansprucht) wird ein Computerprogramm-Element bereitgestellt, das, wenn es durch einen Prozessor ausgeführt wird, ausgelegt ist, das Verfahren auszuführen.

Auf diese Weise können beispielsweise vorprogrammierte Beleuchtungsdaten für der Sitzbelegung entsprechende Beleuchtungsmuster aktiviert werden. Das Computerprogramm-Element kann ausgelegt sein, die Beleuchtungseinheit mehrfach bezüglich der unterschiedlichen Lichtkegel mit Hilfe einer Multiplex-Vorrichtung anzusteuern.

Gemäß einem weiteren Ausführungsbeispiel (nicht beansprucht) ist ein computerlesbares Speichermedium angegeben, auf dem das Computerprogrammelement gespeichert ist.

Ferner sei darauf hingewiesen, dass die obigen Merkmale oder Verfahrensschritte auch kombiniert werden können. Die Kombination der obigen Merkmale oder Schritte kann auch zu wechselwirkenden Effekten und Wirkungen führen, die über die Einzelwirkung der entsprechenden Merkmale hinausgeht, auch wenn dies nicht ausdrücklich im Detail beschrieben wird. Beispielhafte Ausführungsformen der Erfindung werden im Folgenden mit Bezugnahme auf die folgenden Zeichnungen beschrieben.

### KURZE BESCHREIBUNG DER ZEICHNUNGEN

- Fig. 1a: zeigt eine schematische Ansicht eines ersten Ausführungsbeispiels eines Versorgungsmoduls mit je zwei Versorgungseinheiten mit dem Versorgungsmedium Licht bzw. visueller Information für Vierer-Sitzreihen;
- Fig. 1b: zeigt eine schematische Ansicht einer weiteren Ausführungsform eines Versorgungsmodules mit einer Versorgungseinheit mit dem Versorgungsmedium Licht für eine Zweier-Sitzreihe;
- Fig. 1c: zeigt schematisch als Ausführungsform der Versorgungseinheit der Figur 1b eine Daten-Projektionsvorrichtung;
- Fig. 2: zeigt einen Rumpfquerschnitt eines Flugzeuges mit einer weiteren Ausführungsform eines Versorgungsmodules für eine Dreiersitzreihe.
- Fig. 3a: zeigt eine Flugzeugansicht entlang der Längsachse des Flugzeuges mit sechs Versorgungsmodulen und einer ersten Bestuhlungskonfiguration;
- Fig. 3b: zeigt eine Flugzeugansicht entlang der Längsachse des Flugzeuges mit sechs Versorgungsmodulen und einer zweiten Bestuhlungskonfiguration;
- Fig. 4a: zeigt eine schematische Seitenansicht (I) und Draufsicht (II) einer weiteren Ausführungsform eines Versorgungsmoduls;
- Fig. 4b: zeigt eine schematische Seitenansicht (I) und Draufsicht (II) einer weiteren Ausführungsform eines Versorgungsmoduls mit geneigter Anzeigevorrichtung;
- Fig. 5: zeigt eine schematische Darstellung der elektronischen Ansteuerung des Versorgungsmodules;
- Fig. 6: zeigt schematisch zwei Methoden der optischen Steuerung;
- Fig. 7: zeigt eine schematische Darstellung eines Netzwerkes für ein Versorgungsmodul mit einem CMS;
- Fig. 8: zeigt ein Flugzeug mit Versorgungsmodulen für ein Kabinenlayout mit zwei Klassen;
- Fig. 9: zeigt eine schematische Darstellung der Verfahrensschritte eines Verfahrens zum Betreiben eines Versorgungsmoduls zur Versorgung von Fahrzeuginsassen.

### DETAILLIERTE BESCHREIBUNG DER ZEICHNUNGEN

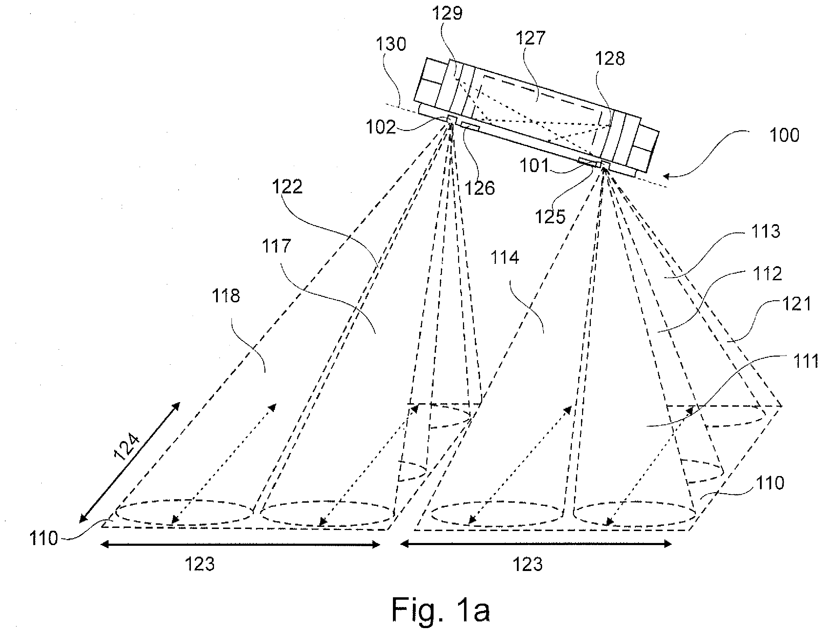

Fig. 1a zeigt ein Versorgungsmodul 100 mit zwei Beleuchtungseinheiten 101 und 102, die für eine Vierer-Sitzreihe ausgelegt sind, einen ersten Versorgungsbereich 121 und einen zweiten Versorgungsbereich 122 zu versorgen.. Dabei umfasst die maximal zu versorgende Beleuchtungsfläche 110 des Versorgungsbereichs 121 etwa eine Breite 123 von ca. 100 cm und eine Länge 124 von etwa 150 cm. Dabei ist die Abmessung der Breite 123 von der zu versorgenden Sitzreihe (Einer-, Zweier- oder Dreier-Abreast) abhängig und kann bei einer Zweier-Sitzreihe ca. 100 cm betragen.

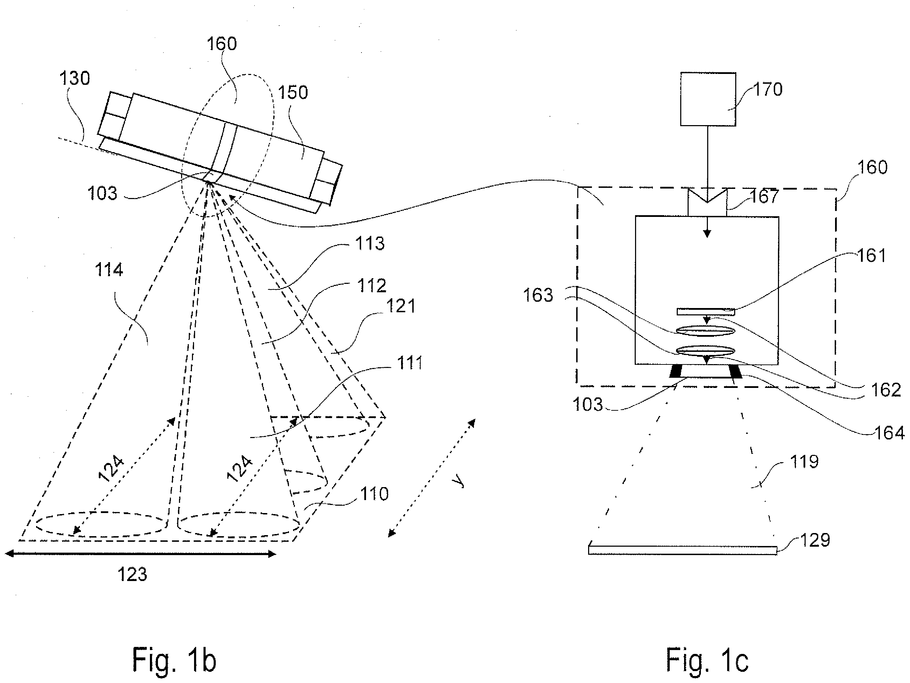

Fig. 1b zeigt eine Auslegung eines Versorgungsmodules für drei in Richtung des Pfeiles y je nach Flugzeuglayout verschiebbare Zweiersitzreihen. Das Versorgungsmodul 150 weist mittig eine einzige Beleuchtungseinheit 103 auf, mit der sechs einzelne Lichtkegel in dem Versorgungsbereich 121 der Breite 123 und Länge 124 bereitgestellt werden können.

In Abhängigkeit von der Belegsituation können in dem Versorgungsbereich 121 der Fig. 1a und 1b unterschiedliche Sitzpositionen mit Teilbereichen 111, 112, 113, 114, die kegelförmig ausgestaltet sind, beleuchtet werden. Beispielsweise kann die Beleuchtungseinheit 101 bzw. 103 sechs verschiedene Teilbereiche, von denen in den Fig. 1a und 1b vier Teilbereiche 111, 112, 113, 114 als schematische Lichtkegel sichtbar sind, beleuchten und kreisförmige Teilbereichflächen auf der Beleuchtungsfläche 110 erzeugen. In Abhängigkeit davon, ob ein Zweier-, ein Dreier- oder ein Vierer-Abreast installiert ist, können gemäß dem Ausführungsbeispiel der Fig. 1a zusätzlich zu den Teilbereichen 111 und 114 die Teilbereiche 117 und 118 zum Lesen bzw. zur Beleuchtung aktiviert werden. Die jeweiligen Teilbereiche können zentral vom Flugpersonal aktiviert werden, wenn die Tabletts während der Essenszeiten beleuchtet werden sollen.

Fig. 1c stellt im Detail die Beleuchtungseinheit 103 der Fig. 1b dar. Die Beleuchtungsmuster bzw. der Lichtkegel 119 kann entsprechend der jeweiligen Belegsituation durch eine Projektionsvorrichtung 160 realisiert werden. Die Projektionsvorrichtung 160 besteht aus einer Lichtquelle 161, die extrem lichtstark ist und aus der Gruppe der Hochleistungs-LEDs oder Laserlichtquellen ausgewählt sein kann.

Zur Regelung des Fokus und der Divergenz des Lichtstrahls (schematisch angedeutet mit dem schwarzen Pfeilspitzen 162) kann ein Linsensystem 163 vorgesehen werden. Die mit 164 bezeichnete Blende kann als mechanische Iris ausgestaltet sein und hitzebeständiges Metall oder Glas umfassen. Anstelle der Blende 164 können andere Elemente eingesetzt werden, die die Farbe, Intensität, Größe, Form und Muster des Lichtstrahles variieren können. Mögliche Elemente sind Filter, Farbräder oder Goboräder, die konkrete Muster, Bilder, Texte, Grafiken, Logos oder Lichtstimmungen erzeugen können. Bei Verwendung von beweglichen Elementen kann die Bewegung durch motorische Antriebe sichergestellt werden. Das Element oder die Blende 164 ist von außen gut zugänglich, so dass bei Bedarf ein Austausch leicht möglich ist.

Die dargestellte Projektionsvorrichtung 160 kann als Mini-Projektor ausgestaltet sein und eine geringe Bauhöhe zwischen 6 und 7 cm oder kleiner besitzen. Durch eine kleine Bauhöhe können Gewichte von nur wenigen kg erreicht werden. Gewichtseinsparungen sind insbesondere in der Luftfahrt von Bedeutung. Ferner weist die Projektionsvorrichtung 160 eine Steuerelektronik auf, die verschiedene Eingangssignale über die Schnittstelle 167 akzeptiert. Die Schnittstelle 167 ist in der dargestellten Ausführungsform mit einem äußeren System 170 verbunden. Dieses äußere System 170 kann beispielsweise das CMS des Flugzeuges sein. Über diese Schnittstelle können beispielsweise Computersignale bzw. Daten empfangen werden, die ausreichend Bildpunkte für eine hoch aufgelöste Fläche mit Durchmesser von 37,5 Zoll (95,25 cm) oder 27 Zoll (ca. 50 cm) erzeugen können.

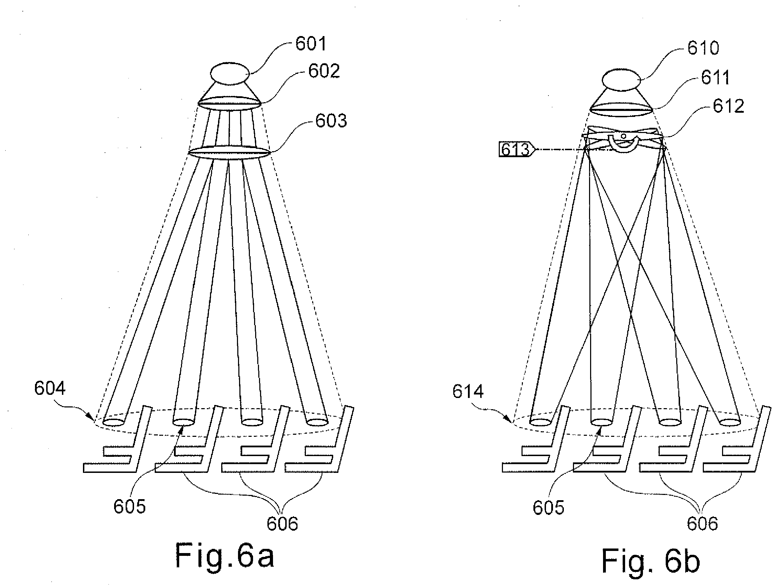

Die Projektionsvorrichtung 160 kann insbesondere als Datenprojektor oder Digitalprojektor genutzt werden. Die Technik der Projektoren kann auf DLP, LCD, CGS (Continuous Grain Silikon) oder anderen Techniken beruhen. Während die DLP-Projektoren das Reflexionsprinzip anwenden, arbeiten LCD-Projektoren nach dem Durchlichtprinzip (siehe auch Fig. 6). Die digitale Lichtverarbeitung kann bei der DLP-Technik aus einem bis drei Spiegel-Chips aufgebaut sein, um hohe Pixelanzahlen zu erreichen. DLP- Systeme können mit einer opto-elektronischen Korrektureinheit einen Keystone-Effekt verhindern.

Mit Hilfe von pixelbasieren Steuerungsdaten können die Beleuchtungseinheiten kreisförmigen Teilbeleuchtungsflächen beleuchten. Dadurch, dass die Beleuchtungseinheit ausgelegt ist, einen Versorgungsbereich örtlich differenziert auf der Grundlage einer Mehrzahl von unterschiedlichen Beleuchtungsmustern unterschiedlich auszuleuchten, können nicht nur Kreisflächen sondern eine Mehrzahl von geometrischen Elementen wie Vierecke, Sechsecke oder Polygramme sowie graphische Symbole dargestellt werden. Zusätzlich ist es möglich, Bildinformation, wie z.B. eine Sitznummer, Videoinformationen, Grafiken, auf Teilbeleuchtungsflächen bzw. Projektionsebenen, die den jeweiligen installierten Sitzen und/oder einer anderen Projektionsfläche zugeordnet werden können, zu projizieren.

Auf diese Weise kann eine Versorgungseinheit oder mehrere Versorgungseinheiten das Versorgungsmedium Beleuchtung für jeweils einen einstellbaren Teilbereich innerhalb des maximal zu versorgenden Versorgungsbereichs zur Verfügung stellen.

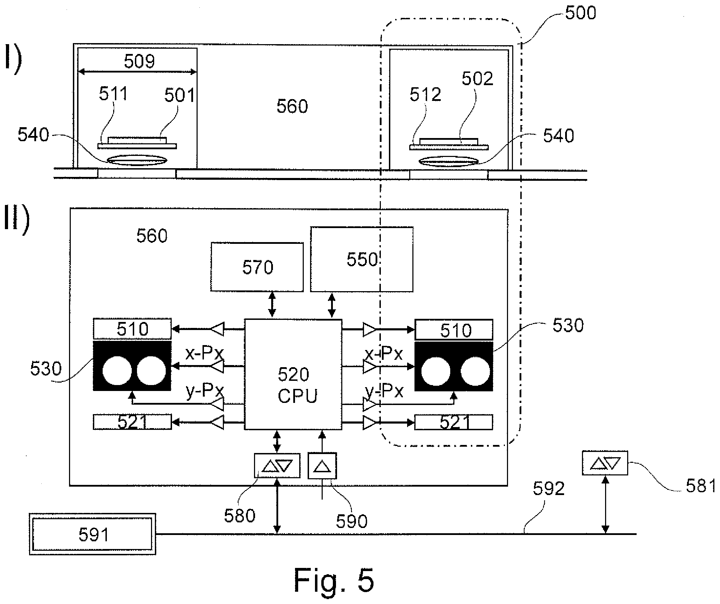

Ein äußeres System 170 kann die an die jeweilige Bestuhlung angepassten Beleuchtungsdaten an die Elektronikeinheit oder Steuerelektronik (dargestellt in Fig. 5 mit Bezugszeichen 560) der Beleuchtungseinheit oder Projektionsvorrichtung 160 übermitteln. Die Steuerungsdaten können über eine Schnittstelle 167 der Projektoreinheit des Versorgungsmodules 100 von einem äußeren System 170 (in Fig. 1c), welches z.B. als zentrales CMS ausgeführt ist, übermittelt werden.

Die Beleuchtungseinheiten 101 und 102 können mit den anpassbaren Bedienflächen 125 und 126, die in Fig. 1a gezeigt sind, aktiviert werden. Das Versorgungsmodul 100 bzw. 150 ist an der Schiene 130 für Versorgungsmodule, auch PSU rail genannt, befestigt.

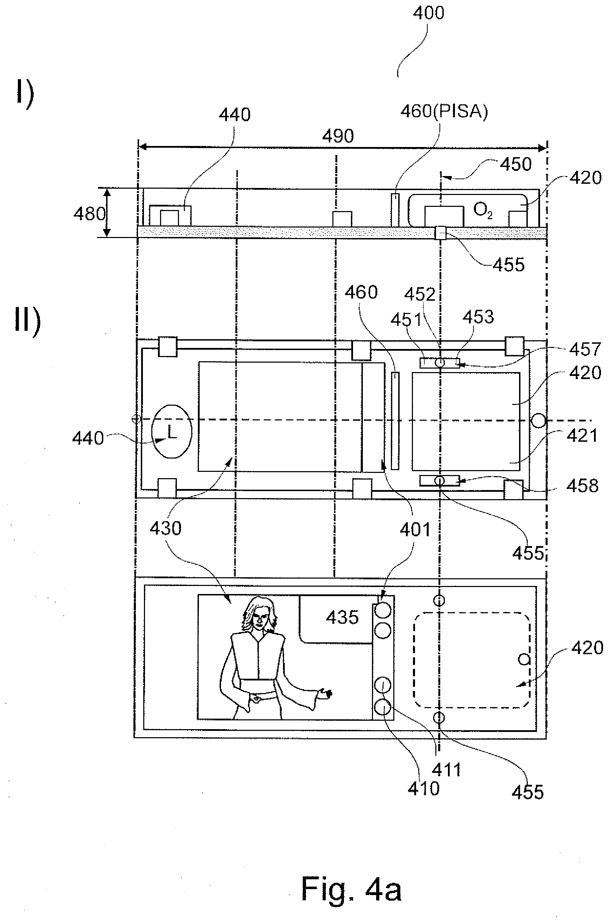

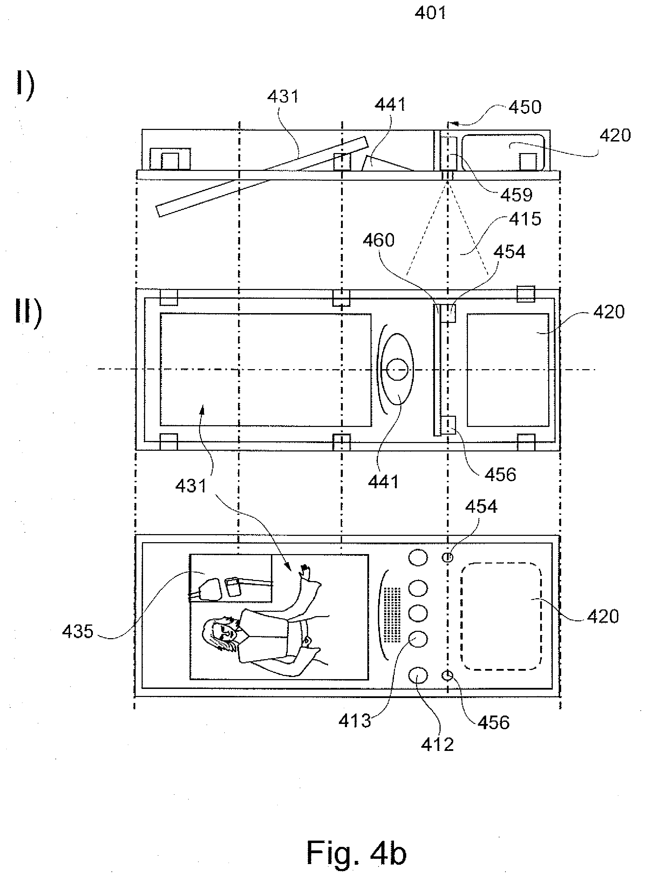

Innerhalb des Versorgungsmodules 100 gemäß Fig. 1 a ist ein Projektionsraum 127 angeordnet, der zwei Projektionseinheiten 128, 129 zur rückwärtigen Projektion einer Information auf einer Anzeigefläche des Versorgungsmodules 100 besitzt. Auf diese Weise kann neben dem Versorgungsmedium Licht das Versorgungsmedium visuelle Information für die Versorgungsbereiche 121 und 122 zur Verfügung gestellt werden. Diese Anzeigefläche bzw. dieses Display (nicht dargestellt) zur Darstellung der visuellen Information kann zur besseren Einsicht der Passagiere in die Blickrichtung der Passagiere geneigt sein (siehe Fig. 4b). Das Display kann weiterhin mit berührungsempfindlichen Flächen ausgestattet sein, die als Bedienflächen 125, 126 der Leseleuchten verwendet werden können.

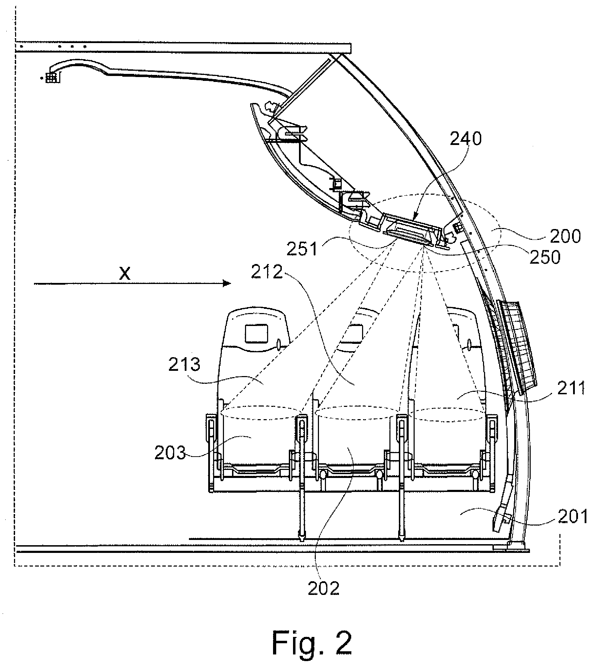

Fig. 2 zeigt eine Teilansicht eines Rumpfquerschnittes eines Flugzeuges mit einer weiteren Ausführungsform eines Versorgungsmodules 200. Es wird ein Flugzeugkabineninnenraum dargestellt mit einer Dreiersitzsitzreihe mit Klappsitzen, die an dem Flugzeugboden über eine Schiene befestigt ist. Das Versorgungsmodul 200 ist mechanisch an der tragenden Struktur der Kabine über eine PSU-Schiene 240 fest installiert. Weiterhin ist das Versorgungsmodul 200 an die zentrale Versorgung und ein CMS des Flugzeuges angeschlossen.

In dieser Ansicht umfasst das Versorgungsmodul 200 zwei Beleuchtungseinheiten 250 und 251, wobei die Lichtkegel oder Beleuchtungsteilbereiche 211, 212 und 213 durch Strichlinien angedeutet sind. Mit den ersten, zweiten oder dritten Beleuchtungsteilbereichen 211, 212 und 213 können die Sitze insbesondere ein Fenstersitz 201, ein Mittelsitz 202 und ein Gangsitz 203 so beleuchtet werden, dass darauf sitzende Passagiere mit Licht zum Lesen versorgt werden. Dabei kann eine einzelne Beleuchtungseinheit 250, 251 zwei oder mehrere Sitze beleuchten. Im Falle einer Vierersitzreihe kann die Beleuchtungseinheit 251 neben dem Sitz 203 auch einen weiteren vierten Sitz (nicht dargestellt) beleuchten (vergleiche auch Fig. 1a). Die Breite der Sitze variiert nach der Bestuhlungskonfiguration und kann ca. 60 oder 50 cm betragen. Dabei zählen die breiteren Sitze zu Businessklassensitzen oder sogenannten C-Klasse-Sitzen. In einer Businessanordnung kann der zweite Stuhl 202 durch eine Mittelkonsole ersetzt werden und breitere Sitze auf der Sitzschiene installiert werden.

Durch geeignete Blenden oder Maskierung der verschiedenen Lichtkegel werden die jeweiligen Sitznachbarn nicht geblendet. Zur Maskierung kann ein hochauflösendes LCD verwendet werden. So ist es möglich, aus einer fixierten und fest installierten Beleuchtungseinheit in einer PSU in X-Richtung (siehe Pfeil) verschiedene Lichtkegel zu maskieren und die seitlich angeordneten Sitze individuell zu beleuchten. Je nach Bestuhlung und Zweck der Beleuchtung können die Lichtkegel auf Essenstabletts oder andere Flächen ausgerichtet werden. Dieses flexible Beleuchtungsprinzip kann an den Kundenbedarf der Airline angepasst werden.

Die Flugzeugcrew kann über ein zentrales CMS die Beleuchtung oder Informationsversorgung während des Fluges verändern. Beispielsweise können die Flugbegleiter den Eindruck von Tageslicht vermitteln. Wenn die Ruhephase der Passagiere unterstützt werden soll, kann auch eine Nachtbeleuchtung simuliert werden.

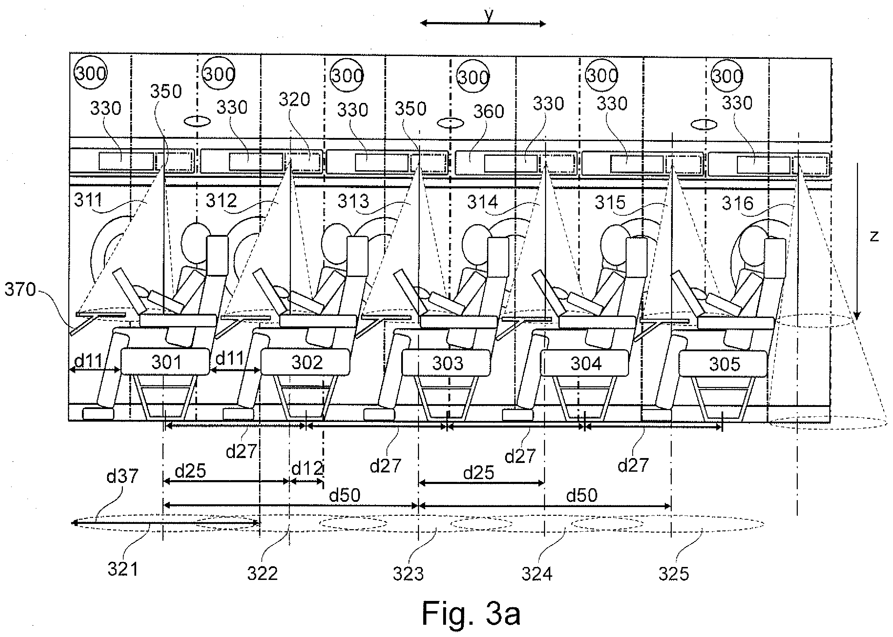

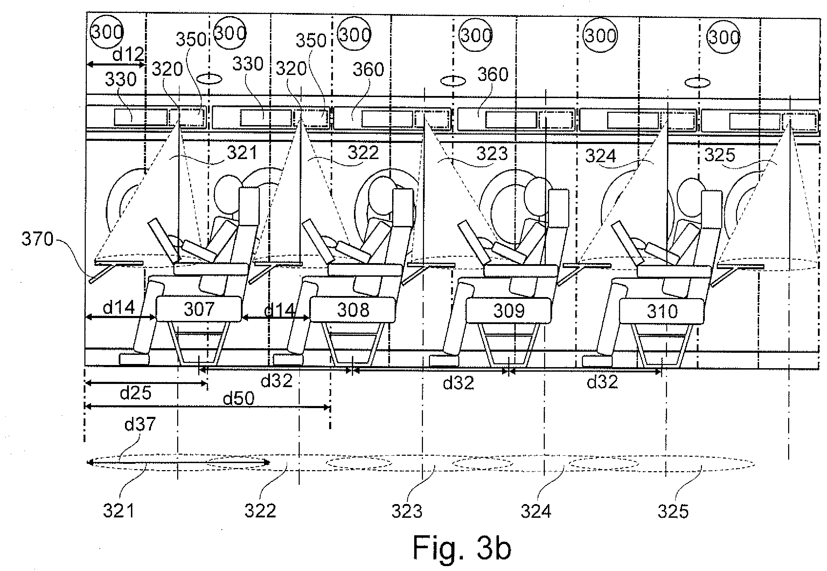

Fig. 3a / 3b zeigen wie Fig. 2 einen Bereich eines Flugzeugkabineninnenraumes, wobei eine Innenansicht entlang der Längsachse des Flugzeuges mit sechs Versorgungsmodulen gezeigt wird. Im Gegensatz zur Fig. 2, die verschiedene Ausleuchtungen in X-Richtung des Flugzeuges zeigt, wird in den folgenden Figuren (Fig. 3a und Fig. 3b) eine individuelle Ausleuchtung in Flugrichtung (vgl. Pfeil Y) veranschaulicht. Die Figuren 3a und 3b unterscheiden sich darin, dass sie zwei verschiedene Bestuhlungskonfigurationen mit unterschiedlichen Sitzreihenabständen mit 27 Zoll in Fig. 3a und 32 Zoll in Fig. 3b darstellen. Damit kann die Funktionsweise des flexiblen Versorgungsmodules veranschaulicht werden. Sowohl in Fig. 3a als auch in Fig. 3b ist das Versorgungsmodul an der gleichen Stelle im Versorgungskanal installiert. Das Versorgungsmodul und damit die flexible Beleuchtungseinheit ist bevorzugt in der letzten Hälfte eines jeden Spantes des

Flugzeuges positioniert. In Fig. 3a und 3b sind die Flugzeugabschnitte zwischen den Spanten mit 300 gekennzeichnet und besitzen eine Länge von 25 Zoll bzw. 63,5 cm (Doppelpfeil d 25). In der Mitte der Flugzeugabschnitte 300 befinden sich im jeweiligen Versorgungsmodul 360 Anzeigevorrichtungen oder Displays 330. Die strichgepunktet umfasste Fläche 320 umfasst die Sauerstoffversorgungseinhcit. In diesem Bereich sind jeweils die Beleuchtungseinheiten oder Projektionsvorrichtungen 350 positioniert.

Im Gegensatz zu herkömmlichen Beleuchtungseinheiten oder Leseleuchten im Flugzeug, die manuell ausgerichtet werden, können die Beleuchtungseinheiten 350 ohne manuelle Positionierung sich nach der Bestuhlungskonfiguration und Sitzlayout des Flugzeuges richten. Diese Positionierungen erfolgen nicht nur bei einer neuen Bestuhlung in der FAL sondern auch zwischen den Flügen (Seat Quick Change). Mit dem flexiblen Versorgungsmodul kann bei notwendigen Layout-Änderungen des Flugzeuges Zeit und Kosten eingespart werden.

Der Abstand der Beleuchtungseinheiten beträgt 25 Zoll bzw. 63,5 cm (siehe Pfeile d 25). Mit diesem Abstand kann bei einem Sitzabstand von 27 Zoll bzw. 68,6 cm (siehe Pfeil d27), wie in Fig. 3a dargestellt, jede Sitzreihe bzw. Sitz 301, 302, 303, 304 und 305 je einen Lichtkegel 311, 312, 313, 314 und 315 zur Lesebeleuchtung oder anderes zur Verfügung gestellt werden. Dies bedeutet eine individuelle Anpassung der einzelnen Lichtkegel in y-Richtung (siehe Pfeil y). Die Lichtkegel können auch auf verschiedene Höhen eingestellt bzw. fokussiert werden. So kann beispielsweise die Sitznummer auf die Sitzfläche des Sitzes 301 fokussiert werden, wobei während der Sitz 301 besetzt ist eine Fokussierung in der Höhe des ausgefahrenen Tabletts 370 eingestellt werden kann. Auf diese Weise kann mit der Beleuchtungseinheit eine individuelle Lesebeleuchtung in X-Richtung (siehe Pfeil x Fig. 2), Y- (siehe Fig. 3a Pfeil y), und Z- Richtung (siehe Fig. 3a Pfeil z) erfolgen.

Auch kann bei Sitzzwischenräumen (siehe Doppelpfeil d11) oder in den Gängen der Lichtkegel 316 bis auf den Boden fokussiert werden, so dass Notwege markiert werden können. Der maximale Lichtkegeldurchmesser in Z-Richtung ist am unteren Rand des Bildes mit den gestrichelten Ellipsen 321, 322, 323, 324 und 325 angedeutet und misst im Durchmesser 37,5 Zoll (Pfeil d37) bzw. 95,25 cm. Tests haben eine maximale Abdeckung von 100 cm mal 100 cm ergeben. Mit diesem Lichtkegeldurchmesser können in X-Richtung (nicht dargestellt) mit einer einzigen Beleuchtungseinheit 350 mindestens zwei Sitze 301, die nebeneinander in X-Richtung angeordnet sind, (zum Beispiel zwei Sitze mit der Breite von je ca. 50 cm) beleuchtet werden. Dabei misst der einzelne Lichtkegel je Sitz ca. 50 cm im Durchmesser.

In Fig. 3a wird gezeigt, dass sich die Ausrichtung der baugleichen Beleuchtungseinheit 350 nach der Position der Sitze 301 bis 305 richtet. Während der Lichtkegel 314 über dem Sitz 304 quasi vertikal auf das Tablett 370 bzw. rechtwinklig auf die Projektionsfläche leuchtet, ist der Lichtkegel 311 über dem Sitz 301 in Richtung des Flugzeugvorderteiles geneigt, um das Tablett 370 oder ein Buch des Passagiers optimal auszuleuchten. Sind die Beleuchtungseinheiten 350 Projektionsvorrichtungen oder Mini-Projektionsvorrichtungen, die ausgelegt sind, Schriftzüge oder andere visuelle Informationen auf das Tablett ohne Verzerrung zu projizieren, wird in einer Elektronikeinheit bzw. PISA des Versorgungsmodules eine automatische Keystone-Korrektur vorgenommen.

Fig. 3b zeigt eine Bestuhlung der Businessklasse (307 bis 310) mit größeren Sitzabständen von 32 Zoll bzw. 81,3 cm als in Fig. 3a mit Abständen von nur 27 Zoll. Aufgrund der größeren Sitze werden auch größere einzelne Lichtkegel je Sitz 307 bis 310 als in Fig. 3a benötigt. Der Durchmesser der Lichtkegel beträgt ca. 18,8 Zoll bzw. 50 cm. Für breitere Sitze über 50 cm können größere Lichtkegel (nicht dargestellt) mit bis zu maximal 100 cm Durchmesser verwendet werden. Für die optimale Beleuchtung aller dargestellten Sitze 307 bis 310 werden vier Beleuchtungseinheiten oder Projektionsvorrichtungen 350 benötigt, wobei das direkt über dem Sitz 309 angeordnete Versorgungsmodul im dargestellten Fall nicht verwendet wird, um mögliche Schatteneffekte durch den Fahrgast zu vermeiden. Fig. 3b zeigt, dass dieselben Versorgungseinheiten an derselben Position eine von Fig. 3a verschiedene Beleuchtung mit den ebenfalls fest installierten Beleuchtungseinheiten optimal ausleuchten können. Um die Displays oder Anzeigevorrichtungen 330 besser einsehen zu können, können diese auch schräg ausgestaltet werden (siehe Fig. 4b).

Das fest installierte Versorgungsmodul und die darin fest installierten Projektionsvorrichtungen werden in der Regel so an einer strategischen Position installiert, dass alle möglichen Belegsituationen abgedeckt werden können. Je nach Flugzeugtyp oder Position im Flugzeug können Versorgungsmodule mit nur einer einzigen Projektionsvorrichtung oder zwei Projektionsvorrichtungen ausgestattet werden.

Fig. 4a zeigt im Detail eine Seitenansicht I) und zwei Draufsichten II) eines Versorgungsmodules 400. Das Versorgungsmodul 400 besitzt eine Länge 490, die den standardisierten Maßen der im Flugzeuginnenraum üblichen Versorgungsmodul-Kanälen entspricht. Beispielsweise kann die Länge 490 des Moduls 25 Zoll betragen, was in etwa 63,5 cm oder der Länge eines halben Gepäckfaches bzw. eines Dreier-Abreasts der Economy Class entspricht.

Die Höhe 480 des Versorgungsmoduls kann beispielsweise 10 cm oder 9 cm betragen. Dabei richtet sich die Höhe 480 des Versorgungsmoduls nach der Versorgungseinheit, die die größte Tiefe aufweist. In dem dargestellten Versorgungsmodul ist dies ein Sauerstoffmaskenbehälter 420, der eine Sauerstoffmaske oder einen Sauerstoffgenerator besitzen kann. Je nach Anzahl der aufzunehmenden Masken, beispielsweise ein bis vier Masken, werden Anschlüsse für jeweilige Schläuche vorgesehen. Dabei können mehrere Schlauchleitungen durch eine einzige Kupplung zusammengeführt werden und aus dem Sauerstoffmaskenbehälter 420 durch eine einzige Leitung herausgeführt werden. Der Anschluss verbindet die Sauerstoffmasken mit der Notsauerstoffversorgung in dem PSC (in Fig. 2 nicht dargestellt).

Der Sauerstoffmaskenbehälter 420 kann derart ausgestaltet sein, dass er mit einfachen Handgriffen in der Aufnahme des Versorgungsmoduls befestigbar ist, beispielsweise durch Klettverbindungen, die an verschiedenen Stellen des Versorgungsmoduls angeordnet sein können. Des Weiteren ist es möglich, den Sauerstoffmaskenbehälter mit Rastverbindungen in entsprechende Aufnahmen, die am Versorgungskanal zur Verfügung stehen, einrasten zu lassen.

Weiterhin schließt eine Abdeckung 421 den Sauerstoffmaskenbehälter 420, (vgl. Draufsicht II)) ab. Die sichtbare Seite der Abdeckung 421 kann als zusätzliche Anzeigefläche für Informationen benutzt werden. So können Anzeigen, wie "Return to Seat", "No Smoking" oder "Fasten Seatbelts" auf dieser Anzeigeeinheit angezeigt werden. Mit Hilfe des CMSs (nicht dargestellt) kann über ein äußeres System eine Aktivierung im Notfall die Klappen der Sauerstoffmaskenbehälter 420 automatisch öffnen. Für Notfälle, in denen die Versorgung durch Strom nicht mehr gegeben ist, ist eine Vorrichtung vorgesehen, wie z.B. eine Lasche, die eine manuelle Öffnung dieses Sicherheitselementes gewährleistet. Nach einem elektronischen Aktivieren der Sauerstoffversorgungseinheit bzw. einem manuellen Ziehen der Lasche wird die Klappe geöffnet und die Passagiersauerstoffmasken fallen, an dem jeweiligen Schlauch hängend, nach unten heraus. Nach dem Herausfallen sind die Sauerstoffmasken für den Passagier leicht zugänglich. Dabei können sie sich seitlich oder auch vor dem Passagier befinden.

Auf der strichpunktierten Linie 450, die die Fig. 4I und 4II verbindet, sind Befeuchtungseinheiten 455 bzw. 452 angeordnet. Die anpassbaren Beleuchtungsflächen 457 bzw. 458 können je nach Sitzposition und Belegsituation angepasst werden. Beispielsweise können Aktivierungsflächen 451, 453 für den linken bzw. rechten Außensitz der zu versorgenden Sitzreihe vorgesehen sein. Die Beleuchtungsflächen 457 und 458 sind so ausgelegt, dass durch eine einzelne Beleuchtungseinheit 455 verschiedene Sitze beleuchtet werden können.

Weiterhin kann eine geeignete Erfassungseinrichtung in dem Versorgungsmodul 400 integriert sein. Diese kann beispielsweise als ein Infrarotsensor oder eine andere Kameratechnik ausgeführt sein, die eine Bedienung des Versorgungsmoduls erfassen und an die bedienten Elemente weitergeben kann.

Fig. 4a zeigt weiterhin die PISA 460, die die Elektronikeinheit und Schnittstelle des Versorgungsmoduls umfasst. Über PISA 460 können beispielsweise die Bedienflächen mit den zu bedienenden Versorgungseinheiten verbunden und aktiviert werden.

Die größte Fläche des Versorgungsmodules nimmt die Anzeigevorrichtung 430 ein. Hierfür eignen sich sowohl mehrfarbige als monochrome Displays, die eine Ablesbarkeit unter in einem Flugzeug gegebenen Lichtverhältnissen gewährleisten. Um eine ausreichende Sichtbarkeit zu gewährleisten, kann eine Hintergrundbeleuchtung vorgesehen werden. Mögliche Technologien für Displays können LCDs, LED-Displays, ein OLED-Display, ein FED, Mikrodisplays oder andere sein.

Die Anzeigevorrichtung 430 kann sowohl für Zeicheninformationen als auch Hinweiszeichen für Passagiere genutzt werden. In einer erweiterten Version können auch größere Displays in das Versorgungsmodul integriert werden. Auf diese Weise können animierte Videos, basierend auf Grafik, Video oder textbasierte Informationen dargestellt werden. In dem dargestellten Bildbeispiel werden die Sicherheitsinformationen zur Flugeinweisung von einer Stewardess an die Passagiere weitergegeben.

Die Piktogrammanzeige 435 kann animiert sein, eine veränderbare Größe besitzen oder auch auf dem gesamten Anzeigefeld, das im Versorgungsmodul möglich ist, verschiedene Positionen einnehmen. Es sind ein oder mehrere Piktogramme pro Zeichenfläche möglich. Die Zeichenfläche kann also flexibel genutzt werden, in Abhängigkeit von dem Inhalt der angezeigt werden soll. Kurze Videosequenzen oder zusätzliche Inhalte wie mehrsprachige Untertitel können angezeigt werden. Aktuelle Daten können über das CMS angezeigt werden. Dabei ist die Anzeigevorrichtung430 farbig und weist ein möglichst geringes Gewicht auf. In dem an der Anzeigevorrichtung 430 anschließenden Panel ist eine Bedienfläche 401 angeordnet, die als eine berührungsempfindliche Fläche vorgesehen sein kann, um beispielsweise Ruftasten für Flugbegleiter oder auch andere Schalter anzuordnen. Beispielsweise können die Bedienflächen 410 und 411 Schaltelemente für die Beleuchtungseinheiten 452 und 455 sein.

Weiterhin weist das Versorgungsmodul einen Lautsprecher 440 auf, um akustische Signale ausgeben zu können. Es kann eine Audioprozesseinheit vorgesehen werden, die beispielsweise MP3-Decoding als Funktion zur Verfügung stellt. Durch Kombinationen mit der Anzeigevorrichtung 430 kann auch ein Musikvideo angezeigt werden. Wenn besondere Kundenwünsche für einen extra ausgewählten Platz im Voraus bekannt sind, kann das Hochladen entsprechender Musik oder Spiele-Tools zur Verfügung gestellt werden. Dabei können die notwendigen Daten entweder aus einer internen Kontrolleinheit des Versorgungsmoduls zur Verfügung gestellt werden oder von dem CMS. Das CMS zu benutzen hat den Vorteil, dass aktuelle Daten angezeigt werden können.

Optional können auch individuelle Luftduschen vorgesehen werden, die beispielsweise in der noch frei zur Verfügung stehenden Fläche oberhalb des Lautsprechers 440 installiert sein können.

Fig. 4b zeigt wie Fig. 4a eine Seitenansicht I) und zwei Draufsichten II) einer weiteren Ausführungsform des weiteren Versorgungsmodules 400, wobei gleiche Bezugszeichen die gleichen Merkmale wie in Fig. 4a kennzeichnen. Die Anzeigevorrichtung 430 ist so geneigt, dass es von den Passagieren sowohl von der rechten als auch von der linken Seite gut eingesehen werden kann. Zebraeffekte können vermieden werden.

Ein Lautsprecher 441, der Audiosignale über die Elektonikeinheit bzw. PISA 460 empfangen kann, ist zwischen der Anzeigevorrichtung 431 und den Bedienflächen 412, 413, die als interaktive Touch Area ausgestaltet sein können, angeordnet. Die Beleuchtungseinheit 459 ist als Mini-Projektionsvorrichtung oder Pico-Projektionseinheit ausgestaltet mit einer maximalen Höhe von 10 cm. Die Seitenansicht I) der Fig. 4b zeigt einen Lichtkegel ausgehend von einer einzelnen Beleuchtungseinheit 459. Mit dieser einzelnen Beleuchtungseinheit 459, die als Lichtquelle eine High Power LED oder einen Laser aufweisen kann, kann mit einem maximalen Lichtkegel 415 ein Raum von 100 cm mal 100 cm beleuchtet werden. Somit können bis zu drei Economy-Sitze nebeneinander (siehe auch Fig. la) beleuchtet werden.

Durch nur eine einzelne Beleuchtungseinheit oder zwei Beleuchtungseinheiten je Versorgungsmodul können vielfältige Sitzbeleuchtungskonfigurationen über ein zentrales Managementsystem gesteuert werden. Entsprechende Daten können auch dezentral in der PISA zwischengespeichert werden. Die Wartung dieses flexiblen Versorgungsmodules ist gering, da es nur einmal eingebaut werden muss und einfach zu reinigen ist. Modernes Design zusammen mit Komponenten wie Touch-Screen und Overhead Video werten die Kabinenausstattung auf. Im Versorgungskanal werden durch die Verwendung des flexiblen Versorgungsmodules Kabel eingespart. Die Komponenten des Versorgungsmodules sind wie die Mini-Projektionsvorrichtungen als Beleuchtungseinheit kompakt gebaut und sparen somit Gewicht ein.

Fig. 5 zeigt eine technische Realisierung und den Aufbau der Elektronikeinheit (PISA) einer weiteren Ausführungsform eines Versorgungsmodules. Die mit I) gekennzeichnete Seitenansicht zeigt ein Detail des Versorgungsmodules. Das gezeigte Versorgungsmodul zeigt zwei Mini-Projektionsvorrichtungen (von denen die rechte mit dem Bezugszeichen 500 angedeutet ist). Die Höhe und Breite 509 der Mini-Projektionsvorrichtungen 500 beträgt ca. 9 cm. Die Steuerelektronik 560 ist zwischen den beiden Mini-Projektionsvorrichtungen 500 mit den Lichtquellen 501 oder 502 ausgestattet.

Die Lichtquellen 501, 502 können eine einzelne Hochleistungs-LED, Laser oder eine Superlumineszenz-LED sein. Direkt unter den Lichtquellen kann eine LCD-Fläche 511, 512 wie z. B. eine Mini-Colour-LCD angeordnet sein. Die hochauflösenden LCD 511, 512 können jeweils zur Maskierung der Lichtquelle 501 verwendet werden. So können Bereiche abgedeckt und gewünschte Lichtmuster bzw. -kegel erzeugt werden. Weiter in Strahlrichtung ist ein Linsensystem 50 mit Objektiv angeordnet. Zwei weitere Linsensysteme werden im Detail in Fig. 6a und 6b dargestellt.

Im Teil II) der Fig. 5 wird ein Realisierungsschema gezeigt, das den Aufbau der Elektronikeinheit PISA zeigt. Die zentrale Einheit der Elektronikeinheit 560 ist die Steuerungseinheit 520, die eine CPU aufweisen kann. In dieser Einheit können Field Programmable Gate Array (FPGA) vorgesehen sein, um verschiedene Schaltungen zu realisieren.

Inputdaten 550 empfängt die Steuerungseinheit 520 von den diversen Schaltflächen (Beleuchtung an/aus oder dimmen, Flugbegleiter-Ruftaste, Lautsprecher). Ferner ist in der PISA eine Speichereinheit 570 enthalten, die ebenfalls Daten an die Steuerungseinheit 520 weitergeben kann (siehe Doppelpfeil zwischen 520 und 570). In der Speichereinheit 570 ist die Belegsituation des Flugzeuges gespeichert, wobei die Daten wie Ausrichtung, Anzahl der Lichtkegel oder Teilbeleuchtungsflächen, Form und Farbe, mit Schrift und Bild usw. von außen von einem CMS stammen können. Weiterhin kann der digitale Inhalt der Anzeigevorrichtung in dem Bildspeicher der Speichereinheit 570 gespeichert werden. Zur Bereitstellung von Bildinhalten und Videos kann ein Video-Server dienen.

Die empfangenen Daten dienen zur Steuerung der Beleuchtungseinheit 510, einer Anzeigevorrichtung 530 und eines Mikrolinsensystems 521. Das Mikrolinsensystem 521 wird als Zoom Stelleinheit verwendet. Von der Steuerungseinheit werden Steuerungsdaten an die Anzeigevorrichtung 530 gesendet, so dass x- und y-Pixel erzeugt werden können. Das in Fig. 5 dargestellte Muster weist zwei kreisförmige beleuchtete Flächen auf. Je nach empfangenen Pixelsignalen können unterschiedliche Beleuchtungsmuster, Farben, Schriften, Bilder oder Videos dargestellt werden. Mit diesem System kann eine hochauflösende Pixelanordnung (HD) zur Verfügung gestellt werden. Die Projektionstechniken können auf der LCD-Technik oder Mikro-Spiegelvorrichtungen der DLP-Technik beruhen.

Da die zentrale Steuerungseinheit mehr als eine Mini-Projektionsvorrichtung 500 ansteuern kann, ist die Anwendung der in der PISA integrierten Ansteuerungselektronik für die Projektionseinheiten besonders effektiv. Die PISA kann dezentral verwendet werden oder in Kombination mit einem äußeren zentralen CMS. Eine geeignete Schnittstelle zu dem Datenbus des CMS ist durch den schematischen Doppelpfeil 580 dargestellt. Der CMS-Datenbus verbindet die PISA 560 des Versorgungsmodules mit den Daten des Kabinenlayouts, die beispielsweise aus einem Speichermedium wie Flash-Karten, SD-Karten oder CAM abgerufen werden können. Weitere Schnittstellen 581 sind vorgesehen, um andere Versorgungsmodule oder andere Elemente mit dem zentralen CMS zu verbinden. Über den Eingang 590 wird das Versorgungsmodul bzw. die PISA mit Strom versorgt.

Die Figuren 6a und 6b zeigen schematisch zwei Methoden der optischen Steuerung. Fig. 6a zeigt eine Lichtquelle 601 mit einer primären Linse 602 und eine fixierte Fokuslinse 603. Dieses Prinzip ermöglicht die Ausleuchtung des gesamten gestrichelten Lichtkegels 604, wobei durch eine geeignete Einstellung vier etwa gleich große Fokusflächen 605 über den Sitzen 606 erzeugt werden können.

Fig. 6b zeigt hingegen ein Prinzip, bei dem nach der Lichtquelle 610 und der primären Linse 611 eine kinematisch flexible Fokuslinse 612 angeordnet ist, die mit einem Stellmotor 613 bewegt werden kann. Die Skizze deutet drei verschiedene Stellungen der Linse an. Hier können auch vier verschiedene Sitze 606 ausgeleuchtet werden. Allerdings können hier nicht vier Sitze gleichzeitig ausgeleuchtet werden, so dass nur eine Sitzposition pro Lichtquelle versorgt werden kann.

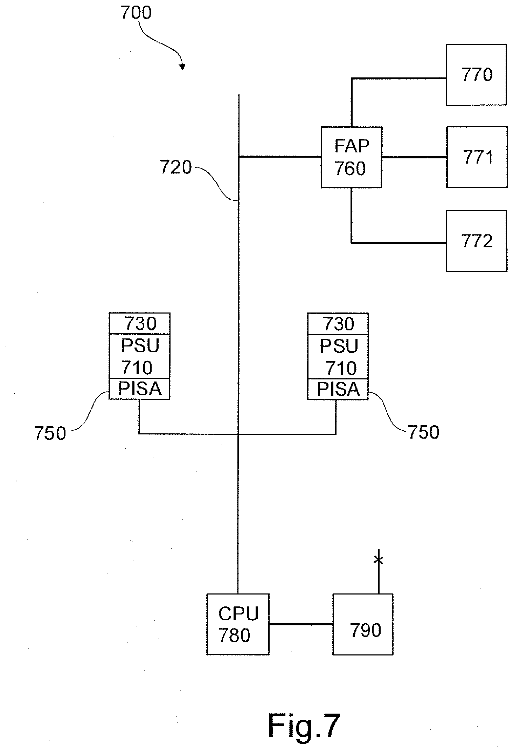

Fig. 7 zeigt eine schematische Darstellung eines Netzwerkes 700 zur Verdeutlichung der externen Ansteuerung der Versorgungsmodule 710. Jedes Versorgungsmodul 710, auch PSU genannt, besitzt eine PISA 750 und eine Anzeigevorrichtung 730. Weitere Versorgungseinheiten wie Beleuchtungseinheiten, Bedienflächeneinheiten, Lautsprecher oder ähnliches sind in dem Versorgungsmodul enthalten, jedoch nicht in Fig. 7 dargestellt. Die Versorgungsmodule 710 sind jeweils mit Datenbussen 720 des CMS verbunden. Das CMS weist eine zentrale Recheneinheit 780 auf und kann beispielsweise mit einer externen Satcom-Anlage 790 verbunden sein, um aktuelle Daten zu empfangen. Die zentrale Recheneinheit 780 kann zur Programmierung der Versorgungsmodule verwendet werden und kann beispielsweise auch für ein FPGA, ASIC etc. stehen. Beispielsweise kann ein Mikroprozessor mit Hilfe von Programmiersprachen wie ASIC auf Grundlage einer Belegsituation programmiert werden. Als programmierbare logische Schaltungen können FPGAs verwendet werden.

Für die Anzeigevorrichtung 730 erlaubt ein am Boden stationiertes Gerät den Fluglinien im Voraus die notwendigen Informationen, wie Kabinenlayout oder andere Informationen auszuwählen und zu konfigurieren. Weiterhin kann die Information vor dem Flug definiert werden, wie beispielsweise Fluginformationen, die geplante Ankunftszeit oder Namen der Besatzung. Auch die Sicherheitsinformationen, Werbung oder Flughafeninformationen sowie Gates für Anschlussflüge und entsprechende Gate-Wechsel können vorab definiert werden. Vorprogrammierte Informationen können beispielsweise übliche Anschnallzeichen sowie Fluglinienlogos oder Sitzreihennummerierungen enthalten.

Mit der Nutzung des CMS ist es möglich, abhängig von der Belegsituation, beispielsweise den verschiedenen Kabinenzonen wie Business Class oder Economy Class, unterschiedliche Informationsinhalte für die entsprechenden Versorgungsmodule zu realisieren. So können besondere Informationen für die erste Klasse, wie spezielle Werbeangebote oder Menüpläne sowie Börsenkurse auf den Anzeigevorrichtungen 730 eingeblendet werden. Weiterhin kann durch einen Adressierungsmechanismus der einzelnen Sitze eine individuelle Adressierung der Sitze stattfinden, wodurch der Sitzinhaber direkt angesprochen werden kann. Die hierfür notwendigen Informationen können aus dem CMS entnommen werden.

Auf den Anzeigevorrichtungen 730 können neben sicherheitsrelevanten Zeichen wie "Fasten Seatbelts" oder Nichtraucherzeichen auch informative und unterhaltende Informationen angezeigt werden. Hierzu zählen beispielsweise aktuelle Nachrichten, Flughafeninformationen, Wetterberichte, Sicherheitsinformationen, Werbung und anderes. Mit Hilfe einer geeigneten Anzeigevorrichtung 730 können die Inhalte auch mehrsprachig mit entsprechenden Tickertexten oder Untertiteln präsentiert werden. Dabei soll es über geeignete Bedienflächen dem Passagier möglich sein, flexibel zwischen den Programmen auszuwählen.

Weiterhin können Flugbegleiter bezogene Informationen über ein Bedienpanel einer FAP-Einheit 760 weitergegeben werden. Das FAP kann beispielsweise eine Tastatur oder andere Eingabemöglichkeiten wie ein Touchscreen vorweisen, um auch Steuerungen an das Versorgungsmodul weitergeben zu können. Mit Hilfe des FAP 760 können auch bestimmte Daten in das System eingespeist werden. Als Speichermedien kommen beispielsweise externe Laufwerke 770 in Frage oder Speicherkarten 771, Memorycards, Memorysticks 772 oder andere Speichermedien, die einfach an standardisierten Schnittstellen des FAPs angeschlossen werden können.

Speichermedien können auch an die zentrale Recheneinheit 780 angeschlossen werden, um zentral Befehle in Abhängigkeit von der Belegsituation auszugeben. Die möglichen Belegsituationen können in dem zentralen Rechner gespeichert werden und am Boden vor dem Flug aufgerufen werden. Auf diese Weise können einfach die PSUs 710 über die Elektronikeinheiten bzw. PISA 750 der PSUs angesteuert werden. In einer anderen Ausführungsform kann die Flugbegleitereinheit 760 und die zentrale Recheneinheit zu einer Rechenbedieneinheit in eine Geräteeinheit zusammengefasst sein.

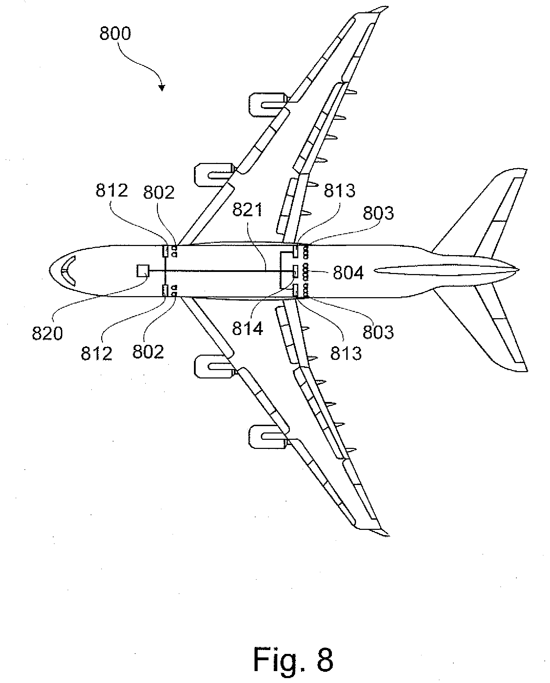

Fig. 8 zeigt ein Flugzeug 800 mit einem Kabinenlayout mit zwei Klassen. In der ersten Klasse bzw. Business Class werden den Passagieren Zweier-Abreasts 802, und in der zweiten Klasse bzw. Economy Class werden Dreier-Abreasts 803 bzw. Vierer-Abreasts 804 zur Verfügung gestellt. Für alle Sitzreihenarten kann ein Versorgungsmodul 812, 813, 814 verwendet werden, welches jeweils den Sitzkonfigurationen angepasst ist. Über ein Datenbussystem 821 in Verbindung mit einer zentralen Steuereinheit 820 können die Versorgungsmodule 812, 813, 814 gesteuert werden und unterschiedliche Informationen in Abhängigkeit von der Klasse weitergegeben werden. Dabei weisen die einzelnen Versorgungsmodule 812, 813, 814 Anzeigevorrichtungen auf, die sichtbar von allen Sitzen einer Sitzreihe sind, unabhängig davon, ob sie rechts bzw. links in Bezug auf das Display angeordnet sind. Falls eine Verschiebung der Sitze oder Vergrößerung der Sitzabstände vorgesehen ist, ist das Display bzw. die Bedienfläche durch elektronische Ansteuerung gut für den Passagier, unabhängig von seiner Sitzposition (R/L), einsehbar bzw. bedienbar.

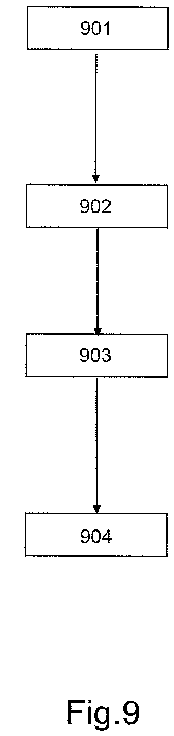

Fig. 9 zeigt schematisch die Verfahrensschritte zum Betreiben eines Versorgungsmoduls zur Versorgung von Fahrzeuginsassen. Im ersten Verfahrensschritt 901 beginnt das Verfahren. D.h. z.B., dass ein Versorgungsmodul bzw. eine oder mehrere Versorgungseinheiten aktiviert und z.B. in Empfangsbereitschaft versetzt werden. Im zweiten Verfahrensschritt 902 werden Steuerungsdaten von einem äußeren System bezüglich einer vorgebbaren Belegungssituation von einem Versorgungsmodul empfangen. Das Versorgungsmodul ist über eine Schnittstelle mit dem externen Kabinen-Managementsystem verbunden. In Schritt 903 wird eine erste Versorgungseinheit des Versorgungsmoduls zur Versorgung von Passagieren mit einem Versorgungsmedium in einem ersten Teilbereich eines ersten Versorgungsbereiches durch das äußere System aktiviert.

Der Schritt 904 kann gleichzeitig mit Verfahrensschritt 903 oder nach der ersten Aktivierung erfolgen und umfasst eine Aktivierung einer zweiten Versorgungseinheit des Versorgungsmoduls für eine Versorgung mit einem zweiten Versorgungsmedium in einem zweiten Teilbereich eines zweiten Versorgungsbereichs durch die externe Steuerungseinheit bzw. dem äußeren System auf der Grundlage der empfangenen Daten. Ist die erste Versorgungseinheit eine Bedienfläche, die ausgelegt ist, eine Beleuchtung zu aktivieren, kann im Verfahrensschritt 903 von zwei Passagieren jeweils eine Lesebeleuchtung aktiviert werden. Daraufhin kann eine zweite Versorgungseinheit, die das Versorgungsmedium Licht zur Verfügung stellt, die angefragten Sitze mit Leselicht in Abhängigkeit der Belegsituation versorgen. Die Schritte 901 und 904 sind optional. Beispielsweise können die Versorgungseinheiten kontinuierlich aktiv sein, so dass eine Aktivierung in Schritt 901 nicht notwendig ist.

Je nach Anzahl der im Versorgungsmodul integrierten Versorgungseinheiten können unterschiedliche Versorgungsmedien den Passagieren angeboten werden. Dabei bietet das flexible Versorgungsmodul vollen Service für den gesamten Flug an und begleitet die Passagiere bis zur Landung bzw. bis zum Ausstieg.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt. Die verwendeten Bezugszeichen dienen lediglich zur Erhöhung der Verständlichkeit und sollen keinesfalls als einschränkend betrachtet werden.

### Bezugszeichenliste

- 100: Versorgungsmodul
- 101: Erste Versorgungseinheit/ Beleuchtungseinheit
- 102: Zweite Versorgungseinheit/ Beleuchtungseinheit
- 103: Beleuchtungseinheit
- 110: Maximale Beleuchtungsfläche
- 111: Erster Teilbereich des ersten Versorgungsbereiches
- 112: Zweiter Teilbereich des ersten Versorgungsbereiches
- 113: Dritter Teilbereich des ersten Versorgungsbereiches
- 114: Vierter Teilbereich des ersten Versorgungsbereiches
- 117: Erster Teilbereich des zweiten Versorgungsbereiches
- 118: Vierter Teilbereich des zweiten Versorgungsbereiches
- 119: Lichtkegel
- 121: Erster Versorgungsbereich
- 122: Zweiter Versorgungsbereich
- 123: Breite der maximalen Beleuchtungsfläche
- 124: Länge der maximalen Beleuchtungsfläche
- 125: Bedienfläche für erste Beleuchtungseinheit
- 126: Bedienfläche für zweite Beleuchtungseinheit
- 127: Projektionsraum
- 128: Erste Projektionsseinheit
- 129: Zweite Projektionsseinheit
- 130: Versorgungsmodulschiene
- 150: Versorgungsmodul
- 160: Projektionsvorrichtung
- 161: Lichtquelle
- 162: Lichtstrahl
- 163: Linsensystem
- 164: Blende
- 167: Schnittstelle
- 170: Äußeres System
- 200: Versorgungsmodul
- 201: Fenstersitz
- 202: Mittelsitz
- 203: Gangsitz
- 211: erster Beleuchtungsteilbereich
- 212: zweiter Beleuchtungsteilbereich
- 213: dritter Beleuchtungsteilbereich
- 240: PSU-Schiene
- 250: Beleuchtungseinheit
- 251: Beleuchtungseinheit

- 300: Flugzeugabschnitt (vgl. Pfeil d25)
- 301-305: Sitze in Abstand von 27 Zoll (d27)
- 307-310: Sitze in Abstand von 32 Zoll (d32)
- 311: Erster Lichtkegel
- 312: Zweiter Lichtkegel
- 313: Dritter Lichtkegel
- 314: Vierter Lichtkegel
- 315: Fünfter Lichtkegel
- 316: Sechster Lichtkegel
- 320: Sauerstoffversorgungseinheit
- 321-325: maximale Beleuchtungsfläche mit Durchmesser von 37, 5 Zoll (d37)
- 330: Anzeigevorrichtung
- 350: Projektionsvorrichtungen
- 360: Versorgungsmodul
- 370: Tablett

- 400: Versorgungsmodul
- 401: Bedienfläche
- 410: Bedienfläche
- 411: Bedienfläche
- 412,413: Bedienflächen
- 415: Beleuchtungsteilbereich/Lichtkegel
- 420: Sauerstoffmaskenbehälter
- 421: Abdeckung
- 430: Anzeigevorrichtung
- 431: Anzeigevorrichtung
- 435: Piktogrammanzeige
- 440: Lautsprecher
- 441: Lautsprecher
- 450: Linie auf Höhe der Beleuchtungseinheit
- 451: Aktivierungsfläche für linken Außensitz
- 452: Beleuchtungseinheit
- 453: Aktivierungsfläche für rechten Außensitz
- 455: Beleuchtungseinheit
- 457: Anpassbare Beleuchtungsfläche
- 458: Anpassbare Beleuchtungsfläche
- 459: Beleuchtungseinheit /Mini-Projektionsvorrichtung
- 460: Passenger Information Supply Adapter (PISA)
- 480: Höhe des Versorgungsmodules
- 490: Länge des Versorgungsmodules
- 500: Mini-Projektionsvorrichtung
- 501, 502: Lichtquellen
- 510: Beleuchtungseinheit
- 511, 512: LCD-Fläche
- 520: Steuerungseinheit
- 521: Mikrolinsensystem
- 530: Anzeigevorrichtung
- 540: Linsensystem
- 550: Inputdaten
- 560: Steuerelektronikeinheit
- 570: Speichereinheit
- 580: Schnittstelle
- 581: Weitere Schnittstellen
- 590: Eingang
- 592: Datenbus Kabinen-Managementsystem

- 601: Lichtquelle
- 602: Primäre Linse
- 603: Fokuslinse
- 604: maximaler Lichtkegel
- 605: Fokusfläche zur Lesebeleuchtung
- 606: Sitze
- 610: Lichtquelle
- 611: Primäre Linse
- 612: flexible Fokuslinse
- 613: Stellmotor
- 614: Maximaler Lichtkegel
- 700: Netzwerk
- 710: Versorgungsmodule
- 720: Datenbus
- 730: Anzeigevorrichtung
- 750: Passenger Information Supply Adapter
- 760: Flight Attendant Panel-Einheit
- 770: Externes Laufwerk
- 771: Speicherkarte
- 772: Memorystick
- 780: Zentrale Recheneinheit
- 790: Satcom-Anlage

- 800: Flugzeug
- 802: Zweier-Sitzreihe
- 803: Dreier-Sitzreihe
- 804: Vierer-Sitzreihe
- 812: Versorgungsmodul mit Zweierkonfiguration
- 813: Versorgungsmodul mit Dreierkonfiguration
- 814: Versorgungsmodul mit Viererkonfiguration
- 820: CMS
- 821: Datenbus

- 901: Erster Verfahrensschritt
- 902: Zweiter Verfahrensschritt
- 903: Dritter Verfahrensschritt
- 904: Vierter Verfahrensschritt

## Patentansprüche

1. Flugzeugkabine mit einem Versorgungsmodul (100, 200, 360, 400) für ein Personentransportfahrzeug, wobei das Versorgungsmodul (100, 200, 360, 400) aufweist:
eine erste Versorgungseinheit (101) für eine Versorgung mit einem ersten Versorgungsmedium in einem ersten Versorgungsbereich (121);
eine Schnittstelle (167, 580) zu einem äußeren System (170) zum Empfangen einer vorgebbaren Belegungssituation des Personentransportfahrzeugs; und
eine Steuerungseinheit (520, 780), die ausgelegt ist zum Aktivieren der ersten Versorgungseinheit (101) in einem ersten Teilbereich (111) des ersten Versorgungsbereiches (121) auf der Grundlage der vorgebbaren Belegungssituation des Personentransportfahrzeugs;
wobei das Versorgungsmodul oberhalb eines Passagiersitzes an einer Deckenverkleidung der Flugzeugkabine angeordnet ist;
wobei das Versorgungsmodul basierend auf einer relativen Anordnung der Sitze zu einem fixierten Punkt in dem Personentransportfahrzeug einstellbar ist, um die Passagiere zu versorgen;
wobei der erste Versorgungsbereich ein Raum ist, der von den zu versorgenden Sitzeinheiten und dem dazugehörigen Beinraum seitlich begrenzt wird und sich bis zu einer Decke der Flugzeugkabine erstreckt;
wobei die erste Versorgungseinheit mindestens eine Beleuchtungseinheit (250, 251) aufweist;
wobei die Beleuchtungseinheit (250, 251) eine Lichtquelle (161) aufweist; **dadurch gekennzeichnet, dass** die Lichtquelle (161) ausgestaltet ist, einzeln zwei oder mehrere Sitze der Flugzeugkabine zu beleuchten.

2. Flugzeugkabine nach Anspruch 1, ferner aufweisend eine zweite Versorgungseinheit (102, 251, 401) für eine Versorgung mit einem zweiten Versorgungsmedium in einem zweiten Versorgungsbereich; und
wobei die Steuerungseinheit (520) zum Aktivieren der zweiten Versorgungseinheit (401) in einem zweiten Teilbereich (111, 114) des zweiten Versorgungsbereiches auf der Grundlage einer vorgebbaren Belegungssituation ausgelegt ist.

3. Flugzeugkabine nach Anspruch 2, wobei der erste Versorgungsbereich (121) und der zweite Versorgungsbereich (122) übereinstimmend ausgelegt sind.

4. Flugzeugkabine nach einem der Ansprüche 1 bis 3, wobei die erste Versorgungseinheit eine Anzeigevorrichtung (430) aufweist, die ausgelegt ist, Symbole, Piktogramme (435), Schriftzeichen, Videos oder andere Informationen in Abhängigkeit von der einen vorgebbaren Belegungssituation anzuzeigen.

5. Flugzeugkabine nach einem der Ansprüche 1 bis 4,
wobei die erste Versorgungseinheit mindestens eine Bedienfläche (125, 411) aufweist, die ausgelegt ist, mindestens eine Bedienfläche (125, 410, 411) in Abhängigkeit von der einen vorgebbaren Belegsituation zu aktivieren und eine Aktivierung durch kapazitive Sensoren, resistive Sensoren, induktive Sensoren, Infrarotsensoren, interaktive Berührungsflächen (201) oder andere Scanner zu übertragen.

6. Flugzeugkabine nach einem der Ansprüche 1 bis 5, wobei das Versorgungmodul (100, 200, 360, 400) eine Elektronikeinheit (460, 560) aufweist mit einem Speicherelement (570), das ausgelegt ist, mindestens eine vorgebbare Belegsituation zu speichern.

7. Flugzeugkabine nach einem der Ansprüche 1 bis 6, wobei die erste Versorgungseinheit (101) eine Beleuchtungseinheit (101, 102) ist, die ausgelegt ist, Teilbeleuchtungsflächen (111, 112, 113, 114) auf Grundlage von einer vorgebbaren Belegsituation auszuleuchten.

8. Flugzeugkabine nach einem der Ansprüche 1 bis 7, wobei die erste Versorgungseinheit (101) eine Projektionseinheit (128) aufweist die als Mini-Projektionsvorrichtung (500) ausgestaltet ist und ausgelegt ist, mit mindestens einer aktivierten Teilbeleuchtungsfläche Bildinformation zu projizieren.

9. Flugzeugkabine nach Anspruch 8, wobei die Mini-Projektionsvorrichtung (500) mindestens ein Lichtmodulationselement aufweist;
wobei das Lichtmodulationselement ausgewählt ist aus der Gruppe bestehend aus:
Digital Light Processor (DLP) mit einer Vielzahl von Mikrospiegeln;
Liquid Crystal Displays (LCDs-) (511, 512);
Liquid Crystal on Silicon (LCoS); und
Micro-Mechanical Systems (MEMS).

10. Flugzeugkabine nach einem der Ansprüche 6 bis 9, wobei die Elektronikeinheit (560) lokal im Versorgungsmodul angeordnet ist und eine Steuerungseinheit aufweist, um mindestens eine Versorgungseinheit und eine Mini-Projektionsvorrichtung (500) zu steuern.

11. Flugzeug mit einer Flugzeugkabine nach einem der Ansprüche 1 bis 10, wobei das äußere System ein Kabinenmanagement-System (780) aufweist, das ausgelegt ist, ein Versorgungsmodul (100, 200, 360, 400) zu steuern oder Daten an die Schnittstelle (580) auszugeben und zu empfangen.

## Claims

1. Aircraft cabin having a supply module (100, 200, 360, 400) for a passenger transport vehicle, wherein the supply module (100, 200, 360, 400) has:
a first supply unit (101) for supply with a first supply medium in a first supply area (121);
an interface (167, 580) to an external system (170) for receiving a prescribable occupancy situation of the passenger transport vehicle; and
a control unit (520, 780) designed to activate the first supply unit (101) in a first subarea (111) of the first supply area (121) on the basis of the prescribable occupancy situation of the passenger transport vehicle;
wherein the supply module is arranged above a passenger seat on a ceiling lining of the aircraft cabin;
wherein the supply module is adjustable based on a relative arrangement of the seats in relation to a fixed point in the passenger transport vehicle, in order to supply the passengers;
wherein the first supply area is a space that is laterally bounded by the seat units to be supplied and the associated leg room and extends as far as a ceiling of the aircraft cabin;
wherein the first supply unit has at least one lighting unit (250, 251);
wherein the lighting unit (250, 251) has a light source (161);
**characterized in that**
the light source (161) is configured to individually light two or more seats in the aircraft cabin.

2. Aircraft cabin according to Claim 1, further having a second supply unit (102, 251, 401) for supply with a second supply medium in a second supply area; and wherein the control unit (520) is designed to activate the second supply unit (401) in a second subarea (111, 114) of the second supply area on the basis of a prescribable occupancy situation.

3. Aircraft cabin according to Claim 2,
wherein the first supply area (121) and the second supply area (122) are of concordant design.

4. Aircraft cabin according to one of Claims 1 to 3, wherein the first supply unit has a display apparatus (430) designed to display symbols, pictograms (435), characters, videos or other information on the basis of the one prescribable occupancy situation.

5. Aircraft cabin according to one of Claims 1 to 4, wherein the first supply unit has at least one control panel (125, 411) designed to activate at least one control panel (125, 410, 411) on the basis of the one prescribable occupancy situation and to transmit an activation by capacitive sensors, resistive sensors, inductive sensors, infrared sensors, interactive contact surfaces (201) or other scanners.

6. Aircraft cabin according to one of Claims 1 to 5, wherein the supply module (100, 200, 360, 400) has an electronic unit (460, 560) having a memory element (570) designed to store at least one prescribable occupancy situation.

7. Aircraft cabin according to one of Claims 1 to 6, wherein the first supply unit (101) is a lighting unit (101, 102) designed to illuminate partial lighting surfaces (111, 112, 113, 114) on the basis of a prescribable occupancy situation.

8. Aircraft cabin according to one of Claims 1 to 7, wherein the first supply unit (101) has a projection unit (128) configured as a mini projection apparatus (500) and designed to use at least one activated partial lighting surface to project image information.

9. Aircraft cabin according to Claim 8,
wherein the mini projection apparatus (500) has at least one light modulation element;
wherein the light modulation element is selected from the group consisting of:
digital light processor (DLP) having a multiplicity of micromirrors;
liquid crystal displays (LCDs) (511, 512);
liquid crystal on silicon (LCoS); and
micromechanical systems (MEMSs).

10. Aircraft cabin according to one of Claims 6 to 9, wherein the electronic unit (560) is arranged locally in the supply module and has a control unit in order to control at least one supply unit and a mini projection apparatus (500).

11. Aircraft having an aircraft cabin according to one of Claims 1 to 10,
wherein the external system has a cabin management system (780) designed to control a supply module (100, 200, 360, 400) or to output data to the interface (580) and to receive data.

## Revendications

1. Cabine d'aéronef comprenant un module d'alimentation (100, 200, 360, 400) pour un véhicule de transport de personnes, le module d'alimentation (100, 200, 360, 400) possédant :
une première unité d'alimentation (101) pour une alimentation avec un premier moyen d'alimentation dans une première zone d'alimentation (121) ;
une interface (167, 580) vers un système externe (170) servant à recevoir une situation d'occupation pouvant être prédéfinie du véhicule de transport de personnes ; et
une unité de commande (520, 780) qui est conçue pour activer la première unité d'alimentation (101) dans une première zone partielle (111) de la première zone d'alimentation (121) en s'appuyant sur la situation d'occupation pouvant être prédéfinie du véhicule de transport de personnes ;
le module d'alimentation étant disposé au-dessus d'un siège de passage au niveau d'un habillage de plafond de la cabine d'aéronef ;
le module d'alimentation étant réglable en se basant sur un arrangement relatif des sièges par rapport à un point fixe dans le véhicule de transport de personnes en vue de fournir l'alimentation aux passagers ;
la première zone d'alimentation étant un espace qui est délimité latéralement par les unités de siège à alimenter et l'espace pour les jambes associé et qui s'étend jusqu'à un plafond de la cabine d'aéronef ;
la première unité d'alimentation possédant au moins une unité d'éclairage (250, 251) ;
l'unité d'éclairage (250, 251) possédant une source de lumière (161) ;
**caractérisée en ce que**
la source de lumière (161) est configurée pour éclairer individuellement deux sièges ou plus de la cabine d'aéronef.

2. Cabine d'aéronef selon la revendication 1, qui possède en outre
une deuxième unité d'alimentation (102, 251, 401) pour une alimentation avec un deuxième moyen d'alimentation dans une deuxième zone d'alimentation ; et
l'unité de commande (520) étant conçue pour activer la deuxième unité d'alimentation (401) dans une deuxième zone partielle (111, 114) de la deuxième zone d'alimentation en s'appuyant sur une situation d'occupation pouvant être prédéfinie.

3. Cabine d'aéronef selon la revendication 2, la première zone d'alimentation (121) et la deuxième zone d'alimentation (122) étant conçues coïncidentes.

4. Cabine d'aéronef selon l'une des revendications 1 à 3, la première unité d'alimentation possédant un dispositif d'affichage (430) qui est conçu pour afficher des symboles, des pictogrammes (435), des caractères, des vidéos ou d'autres informations en fonction de ladite situation d'occupation pouvant être prédéfinie.

5. Cabine d'aéronef selon l'une des revendications 1 à 4, la première unité d'alimentation possédant au moins une surface de service (125, 411) qui est conçue pour activer au moins une surface de service (125, 410, 411) en fonction de ladite situation d'occupation pouvant être prédéfinie et pour transmettre une activation par des capteurs capacitifs, des capteurs résistifs, des capteurs inductifs, des capteurs d'infrarouges, des surfaces tactiles interactives (201) ou d'autres dispositifs de lecture par balayage.

6. Cabine d'aéronef selon l'une des revendications 1 à 5, le module d'alimentation (100, 200, 360, 400) possédant une unité électronique (460, 560) munie d'un élément de mémoire (570) qui est conçu pour mémoriser au moins une situation d'occupation pouvant être prédéfinie.

7. Cabine d'aéronef selon l'une des revendications 1 à 6, la première unité d'alimentation (101) étant une unité d'éclairage (101, 102) qui est conçue pour illuminer des surfaces d'éclairage partielles (111, 112, 113, 114) en s'appuyant sur une situation d'occupation pouvant être prédéfinie.

8. Cabine d'aéronef selon l'une des revendications 1 à 7, la première unité d'alimentation (101) possédant une unité de projection (128) qui est réalisée sous la forme d'un dispositif de projection miniature (500) et conçue pour projeter des informations d'image avec au moins une surface d'éclairage partielle activée.

9. Cabine d'aéronef selon la revendication 8,
le dispositif de projection miniature (500) possédant au moins un élément de modulation de lumière ;
l'élément de modulation de lumière étant choisi dans le groupe composé des éléments suivants :
processeur numérique de la lumière (DLP) doté d'une pluralité de micromiroirs ;
afficheurs à cristaux liquides (LCD) (511, 512) ;
cristaux liquides sur silicium (LCoS) ; et
systèmes micromécaniques (MEMS).

10. Cabine d'aéronef selon l'une des revendications 6 à 9, l'unité électronique (560) étant disposée localement dans le module d'alimentation et possédant une unité de commande pour commander au moins une unité d'alimentation et un dispositif de projection miniature (500).

11. Aéronef comprenant une cabine d'aéronef selon l'une des revendications 1 à 10, le système extérieur possédant un système de gestion de cabine (780) qui est conçu pour commander un module d'alimentation (100, 200, 360, 400) ou pour délivrer des données et en recevoir au niveau de l'interface (580).
